# EUROPEAN PATENT APPLICATION

(11) **EP 4 850 907 A1**
(43) Date of publication of application: **09.12.2026**
(21) Application number: 24922041.9
(22) Date of filing: 17.12.2024
(51) Int. Cl.: B32B 27/32, B65D 65/40, C08J 5/18

(54) **BIAXIALLY ORIENTED POLYPROPYLENE FILM, AND LAMINATE**

(30) Priority: 29.01.2024 JP 2024011278; 31.01.2024 JP 2024012919
(71) Applicant: Toyobo Co., Ltd., Kita-ku Osaka-shi, Osaka 530-0001 (JP)
(72) Inventor: TANEKI, Kensuke, Inuyama-shi, Aichi 484-8508 (JP); KANAYA, Atsushi, Inuyama-shi, Aichi 484-8508 (JP); IMAI, Toru, Inuyama-shi, Aichi 484-8508 (JP)
(74) Representative: Vossius & Partner Patentanwälte Rechtsanwälte mbB
(86) International application number: PCT/JP2024/044588
(87) International publication number: WO 2025/164123

(57) **Abstract**

An object of the present disclosure is to provide a laminated body which is excellent in laminate strength, is excellent in appearance of a heat-sealed portion, and hardly produces stains on a guide roll. A biaxially oriented polypropylene film includes a base material layer A formed of a polypropylene-based resin composition; a surface layer B formed of a polypropylene-based resin composition; and a surface layer C formed of a polypropylene-based resin composition, wherein the following (1) to (4) are satisfied: (1) the biaxially oriented polypropylene film has a heat shrinkage rate in a longitudinal direction at 150°C of 0.0% or more and 10.0% or less; (2) the biaxially oriented polypropylene film has a heat shrinkage rate in a width direction at 150°C of 0.0% or more and 15.0% or less; (3) a falling-off rate of an anti-blocking agent in the surface layer B and a falling-off rate of an anti-blocking agent in the surface layer C are each 10% or less; and (4) a laminate strength is 1.5 N/15 mm or more.

## Description

### TECHNICAL FIELD

The present disclosure relates to a biaxially oriented polypropylene film and a laminated body.

### BACKGROUND ART

Conventionally, biaxially oriented polypropylene films have been widely used as packaging materials for articles such as foods and textile products because of their excellent transparency and mechanical properties.

In food packaging, a biaxially oriented polypropylene film is used in some cases with lamination of a gas barrier layer. In addition, for the purpose of indicating contents or enhancing design with a food packaging bag, a biaxially oriented polypropylene film is used in some cases with lamination of a printed layer. For example, Patent Document 1 discloses a laminated body having a configuration of a base material layer for printing/a printed layer/an adhesive layer/an inorganic thin film layer/a base material layer for vapor deposition/an adhesive layer/a sealant film, in which each base material layer and the sealant film are made of the same material, namely, polypropylene from the viewpoint of recycling.

As a biaxially oriented polypropylene film having improved adhesiveness to a printing ink, for example, Patent Document 2 discloses that the film is provided with a surface layer having prescribed surface roughness and wetting tension. In addition, as to a case where an aluminum vapor deposition layer is provided on biaxially oriented polypropylene, for example, Patent Document 3 discloses a film having a surface layer having a relatively small surface roughness and a prescribed wetting tension as a film excellent in adhesiveness to the aluminum vapor deposition layer.

### PRIOR ART DOCUMENTS

### PATENT DOCUMENTS

Patent Document 1: WO 2021/020400 A
Patent Document 2: WO 2018/142983 A
Patent Document 3: WO 2022/004340 A

### SUMMARY OF THE INVENTION

### PROBLEMS TO BE SOLVED BY THE INVENTION

However, studies conducted by the present inventors have revealed that a laminated body obtained by laminating a conventional biaxially oriented polypropylene film and a heat-sealable film may have insufficient laminate strength between the films. In addition, it has also been found that wrinkles may occur in a heat-sealed portion formed when such a laminated body is heat-sealed. In addition, it has also been found that there is a case where the anti-blocking agent falls off to produce stains on a guide roll when such a laminated body is wound. Therefore, an object of the present disclosure is to provide a laminated body which is excellent in laminate strength, is excellent in appearance of a heat-sealed portion, and hardly produces stains on a guide roll. Another object is to provide a biaxially oriented polypropylene film capable of forming such a laminated body.

### SOLUTIONS TO THE PROBLEMS

The biaxially oriented polypropylene film of an embodiment that could solve the above problems is as follows.
[1] A biaxially oriented polypropylene film comprising:
   a base material layer A formed of a polypropylene-based resin composition;
   a surface layer B formed of a polypropylene-based resin composition; and
   a surface layer C formed of a polypropylene-based resin composition,
   wherein the following (1) to (4) are satisfied:
      (1) the biaxially oriented polypropylene film has a heat shrinkage rate in a longitudinal direction at 150°C of 0.0% or more and 10.0% or less;
      (2) the biaxially oriented polypropylene film has a heat shrinkage rate in a width direction at 150°C of 0.0% or more and 15.0% or less;
      (3) a falling-off rate of an anti-blocking agent in the surface layer B and a falling-off rate of an anti-blocking agent in the surface layer C are each 10% or less; and
      (4) a laminate strength is 1.5 N/15 mm or more.
   The biaxially oriented polypropylene film and the laminated body of the embodiment are preferably any of the following.
[2] The biaxially oriented polypropylene film according to [1], wherein a surface of the surface layer B, a surface of the surface layer C, or surfaces of both the surface layers have a wetting tension of 36 mN/m or more.
[3] The biaxially oriented polypropylene film according to [1] or [2], wherein the surface layer B and the surface layer C each contain a polypropylene-based resin having a melting point of 130°C or more and 158°C or less in a content of 25% by mass or more and 85% by mass or less.
[4] The biaxially oriented polypropylene film according to any one of [1] to [3], wherein the surface layer B and the surface layer C each contain a polypropylene-based resin having a melting point of 159°C or more and 175°C or less in a content of 15% by mass or more and 75% by mass or less.
[5] The biaxially oriented polypropylene film according to [3], wherein the polypropylene-based resins of the surface layer B and the surface layer C are each a propylene-ethylene-butene copolymer.
[6] The biaxially oriented polypropylene film according to any one of [1] to [5], wherein the base material layer A contains 70% by mass or more of a polypropylene-based resin having a mesopentad fraction ([mmmm]%) of 95.0% or more and 99.9% or less and a melting point of 160°C or more and 175°C or less.
[7] The biaxially oriented polypropylene film according to any one of [1] to [6], wherein the surface layer B, the surface layer C, or both the surface layers have a surface resistance value of 14.0 LogΩ or more and 18 LogΩ or less.
[8] The biaxially oriented polypropylene film according to any one of [1] to [7], wherein
   a content of the anti-blocking agent in the surface layer B is 100 ppm or more and 10000 ppm or less, and
   a content of the anti-blocking agent in the surface layer C is 100 ppm or more and 10000 ppm or less.
[9] The biaxially oriented polypropylene film according to [8], wherein the anti-blocking agent of the surface layer B and the anti-blocking agent of the surface layer C each contain particles having a pore volume of 0.2 mL/g to 3 mL/g.
[10] The biaxially oriented polypropylene film according to any one of [1] to [9], wherein (4) the laminate strength is 10 N/15 mm or less.
[11] A laminated body comprising the biaxially oriented polypropylene film according to any one of [1] to [10], and further comprising a heat-sealable polyolefin film,
   wherein the surface layer B, the base material layer A, the surface layer C, and the heat-sealable polyolefin film are laminated in this order.
[12] The laminated body according to [11], further comprising a functional layer,
   wherein the functional layer, the surface layer B, the base material layer A, the surface layer C, and the heat-sealable polyolefin film are laminated in this order.
[13] The laminated body according to [12], wherein the functional layer is a printed layer, a vapor deposition layer, or a coating layer.
[14] The laminated body according to [12] or [13], further comprising a stretched polyolefin film or a stretched polyester film,
wherein the stretched polyolefin film or the stretched polyester film, the functional layer, the surface layer B, the base material layer A, the surface layer C, and the heat-sealable polyolefin film are laminated in this order.

### EFFECTS OF THE INVENTION

With the above configurations, it is possible to provide a laminated body which is excellent in laminate strength, is excellent in the appearance of a heat-sealed portion, and hardly produces stains on a guide roll. Further, it is also possible to provide a biaxially oriented polypropylene film capable of forming such a laminated body.

### BRIEF DESCRIPTION OF THE DRAWINGS

Fig. 1 is an example of a 125-magnification enlarged view taken by a microscope of a surface of an aqueous ink printed layer being even in dot size and having no ink cissing.
Fig. 2 is an example of a 125-magnification enlarged view taken by a microscope of a surface of an aqueous ink printed layer being even in dot size and having ink cissing.
Fig. 3 is an example of a 125-magnification enlarged view taken by a microscope of a surface of an aqueous ink printed layer being uneven in dot size and having ink cissing.
Fig. 4 is an enlarged view of an ink cissing portion in Fig. 2.

### MODE FOR CARRYING OUT THE INVENTION

The biaxially oriented polypropylene film of the embodiment has a base material layer A formed of a polypropylene-based resin composition, a surface layer B formed of a polypropylene-based resin composition, and a surface layer C formed of a polypropylene-based resin composition. Each layer will be described in detail below.

### (1) Base material layer A

The base material layer A is formed of a polypropylene-based resin composition. It is preferable that the thermal dimensional stability, mechanical strength, and transparency of the biaxially oriented polypropylene film are enhanced by the base material layer A. The polypropylene-based resin composition of the base material layer A preferably contains a polypropylene-based resin in a content of 70% by mass or more, more preferably 80% by mass or more, still more preferably 90% by mass or more, and particularly preferably 95% by mass or more based on the whole of the base material layer A. On the other hand, the polypropylene-based resin composition of the base material layer A may contain the polypropylene-based resin in a content of 100% by mass or less, 99.9% by mass or less, 99.8% by mass or less, or 99.6% by mass or less based on the whole of the base material layer A. When the polypropylene-based resin composition of the base material layer A contains two or more polypropylene-based resins, the aforementioned content is a total value.

Various suitable physical properties of the polypropylene-based resin will be described below, but when two or more different polypropylene-based resins are used, a value obtained by mass-averaging the physical property values of the respective polypropylene-based resins is preferably within a numerical range described later. For example, when the polypropylene-based resin composition contains 50% by mass of a polypropylene-based resin having a melting point of 160°C and 50% by mass of a polypropylene-based resin having a melting point of 170°C, the melting point of the polypropylene-based resin composition is 165°C on a mass average. Hereinafter, the same applies to the mass average.

The polypropylene-based resin contained in the base material layer A has a melting point of preferably 160°C or more and 175°C or less, more preferably 164°C or more and 173°C or less, and still more preferably 166°C or more and 171°C or less. When the melting point is 160°C or more, thermal dimensional stability and mechanical strength can be enhanced. When the melting point is 175°C or less, an increase in cost in polypropylene production is easily controlled, and the film is hardly broken during film formation. The melting point can be further increased by blending a crystal nucleating agent in the polypropylene-based resin described above. The melting point can be measured with a differential scanning calorimeter (DSC). Specifically, the melting point is a main peak temperature of an endothermic peak associated with melting which is observed when 5 mg of a sample is filled in an aluminum pan and mounted, melted at 230°C for 5 minutes in a nitrogen atmosphere, cooled to 30°C at a scanning speed of - 10°C/min, then held for 5 minutes, and heated at a scanning speed of 10°C/min.

In the polypropylene-based resin contained in the base material layer A, the mesopentad fraction ([mmmm]%), which is an index of stereoregularity, is preferably 95.0 to 99.9%, more preferably 97.0 to 99.7%, still more preferably 97.5 to 99.5%, and particularly preferably 98.0 to 99.3%. When the mesopentad fraction is 95.0% or more, the crystallinity of the polypropylene-based resin is increased, the melting point, the degree of crystallinity, and the degree of crystal orientation of crystals in the base material layer A are improved, and thermal dimensional stability and mechanical strength can be increased. When the mesopentad fraction is 99.9% or less, the cost in polypropylene production is easily controlled, and the film is hardly broken during film formation. The mesopentad fraction is measured by a nuclear magnetic resonance method (so-called NMR method).

The melt flow rate (MFR) of the polypropylene-based resin contained in the base material layer A is preferably 4.0 to 30 g/10 min, more preferably 4.5 to 25 g/10 min, still more preferably 4.8 to 22 g/10 min, particularly preferably 5.0 to 20 g/10 min, and most preferably 5.5 to 10 g/10 min as measured in accordance with the condition M (230°C, 2.16 kgf) in JIS K 7210 (1995). When the MFR of the polypropylene-based resin is 4.0 g/10 min or more, the amount of low-molecular-weight components of the polypropylene-based resin contained in the base material layer A is increased, so that the oriented crystallization of the polypropylene-based resin is further promoted, the degree of crystallinity in the base material layer A is more likely to be increased, and entanglement of polypropylene molecular chains in amorphous portions is further reduced, so that thermal dimensional stability and mechanical strength can be increased. When the MFR of the polypropylene-based resin is 30 g/10 min or less, the film formability of the film is easily maintained.

The polypropylene-based resin contained in the base material layer A preferably has a weight average molecular weight (Mw) of 180,000 to 500,000. When the Mw is less than 180,000, the melt viscosity is low, so that the material is not stable during casting, and the film formability may be deteriorated. When the Mw exceeds 500,000, the amount of components having a molecular weight of 100,000 or less decreases, and the heat shrinkage rate at a high temperature may increase. The Mw is more preferably 190,000 to 400,000, still more preferably 200,000 to 380,000, and particularly preferably 210,000 to 350,000.

The number average molecular weight (Mn) of the polypropylene-based resin contained in the base material layer A is preferably 20,000 to 200,000. When the Mn is smaller than 20,000, the melt viscosity is low, so that the material is not stable during casting, and the film formability may be deteriorated. When the Mn exceeds 200,000, the heat shrinkage rate at a high temperature may be high. The Mn is more preferably 30,000 to 120,000, still more preferably 40,000 to 110,000, particularly preferably 50,000 to 100,000, and most preferably 60,000 to 90,000.

The polypropylene-based resin contained in the base material layer A preferably has Mw/Mn, which is an index of molecular weight distribution, of 2.8 or more and 10 or less. The Mw/Mn is more preferably 3.0 or more and 8.0 or less, still more preferably 3.2 or more and 6.0 or less, and particularly preferably 3.5 or more and 5.0 or less. When the Mw/Mn of the polypropylene-based resin is 2.8 or more, the proportion of low-molecular-weight components of the polypropylene-based resin contained in the base material layer A is increased, so that the oriented crystallization of the polypropylene-based resin is further promoted, the degree of crystallinity in the base material layer A is more likely to be increased, and entanglement of polypropylene molecular chains in amorphous portions is further reduced, so that thermal dimensional stability and mechanical strength can be increased. The molecular weight distribution of the polypropylene-based resin can be adjusted by polymerizing components having different molecular weights in a series of plants in multiple stages, blending components having different molecular weights offline with a kneader, conducting polymerization with catalysts having different performances blended, or conducting polymerization using a catalyst capable of realizing a desired molecular weight distribution.

### (Polypropylene homopolymer)

The polypropylene-based resin contained in the base material layer A is preferably a polypropylene homopolymer. The polypropylene homopolymer is a polypropylene that contains substantially no α-olefin component other than propylene, specifically, a polypropylene copolymer containing more than 0% and 1 mol% or less of an α-olefin component other than propylene and 99 mol% or more of propylene as constitutional units, or a polypropylene that contains no component other than propylene as constitutional units. As described above, in the present disclosure, the polypropylene homopolymers encompass not only polypropylene not containing any α-olefin component other than propylene at all, but also polypropylene copolymers containing more than 0% and 1 mol% or less of α-olefin components other than propylene and 99 mol% or more of propylene as constitutional units. Even when the polypropylene homopolymer contains an α-olefin component other than propylene, the content of the α-olefin component other than propylene (the total amount of ethylene and α-olefins having 4 or more carbon atoms) is 1 mol% or less as described above, preferably 0.3 mol% or less, more preferably 0.2 mol% or less, and still more preferably 0.1 mol% or less. Within the above range, the crystallinity is easily improved. Examples of the α-olefin components having 4 or more carbon atoms include 1-butene, 1-pentene, 3-methyl-1-pentene, 3-methyl-1-butene, 1-hexene, 4-methyl-1-pentene, 5-ethyl-1-hexene, 1-octene, 1-decene, 1-dodecene, 1-tetradecene, 1-hexadecene, 1-heptadecene, 1-octadecene, and 1-eicosene. As the polypropylene homopolymer, two or more different polypropylene homopolymers can also be used.

### (Other than polypropylene homopolymer)

The polypropylene-based resin composition constituting the base material layer A may contain an additive or may contain another resin other than the polypropylene homopolymer. Examples of the additive include an antioxidant, an ultraviolet absorber, a nucleating agent, a pressure-sensitive adhesive, an antifogging agent, a flame retardant, an inorganic or organic filler, or a mixture thereof. Examples of said another resin include polyolefin resins other than the polypropylene homopolymer used in the base material layer A, and various elastomers. These may be used after being successively polymerized using a multi-stage reactor, or being blended with a polypropylene-based resin using a Henschel mixer, or diluting master pellets prepared in advance using a melt-kneader with polypropylene into a prescribed concentration, or the entirety may be melt-kneaded in advance before use. When the polypropylene-based resin to be used in the base material layer A is a single resin and has an excessive large surface resistance value, the surface resistance value may be reduced by the addition of a surfactant.

### (2) Surface layer B and surface layer C

When the surface layer B, the surface layer C, or both of the surface layer B and the surface layer C are provided on a surface thereof with a functional layer, such as a printed layer, a vapor deposition layer, or a coating layer, it is preferable that the surface layer B, the surface layer C, or both of the surface layer B and the surface layer C have high adhesiveness to the functional layer, and further, it is preferable that the surface layer B, the surface layer C, or both of the surface layer B and the surface layer C are provided with slipperiness and anti-blocking property. The functional layer is a layer having at least one function such as adhesiveness, coatability, designability, water vapor barrier property, oxygen barrier property, thermal conductivity, low dielectricity, high dielectricity, and heat resistance. Examples of the functional layer include a printed layer, a vapor deposition layer, and a coating layer, and the functional layer is preferably a printed layer, a vapor deposition layer, or a coating layer.

The surface layer B is formed of a polypropylene-based resin composition. The surface layer C is formed of a polypropylene-based resin composition. The raw material compositions and characteristics of the surface layer B and the surface layer C will be described in detail below, but the raw material compositions and characteristics of the surface layer B and the surface layer C may be the same or different. The compositions and characteristics of the raw materials may be changed according to the purpose of each of the surface layer B and the surface layer C. For example, when it is desired to make the adhesiveness of the surface of the surface layer B higher than that of the surface layer C, it is preferable that the polypropylene-based resin having a melting point of 130°C or more and 158°C or less blended in the surface layer B is more than the polypropylene-based resin having a melting point of 130°C or more and 158°C or less blended in the surface layer C. Alternatively, the opposite may be applied. In addition, through adjustment of the type, particle size, and blending amount of each of the anti-blocking agents to be blended in the surface layer B and the surface layer C, the gas barrier properties of the vapor deposition layer can be improved by reducing the surface projections on one surface and smoothing the surface, and the slipperiness and the anti-blocking property can be imparted by enlarging the surface projections on the other surface.

The surface layer B and the surface layer C each preferably contain a polypropylene-based resin having a melting point of 130°C or more and 158°C or less in a content of 25% by mass or more and 85% by mass or less. The surface layer B and the surface layer C each preferably contain a polypropylene-based resin having a melting point of 159°C or more and 175°C or less in a content of 15% by mass or more and 75% by mass or less. On the other hand, in the surface layer B and the surface layer C, the content of the polypropylene-based resin having a melting point of 129°C or less is preferably small, and specifically, the content is preferably 20% by mass or less, more preferably 10% by mass or less, still more preferably 5% by mass or less, particularly preferably 1% by mass or less, and most preferably the content is 0% by mass (in other words, a polypropylene-based resin having a melting point of 129°C or less is not contained). Hereinafter, the polypropylene-based resin having a melting point of 159°C or more and 175°C or less contained in the surface layer B and the surface layer C may be referred to as "high-melting-point polypropylene-based resin", the polypropylene-based resin having a melting point of 130°C or more and 158°C or less may be referred to as "medium-melting-point polypropylene-based resin", and the polypropylene-based resin having a melting point of 129°C or less may be referred to as "low-melting-point polypropylene-based resin", and the polypropylene-based resins contained in the surface layer B and the surface layer C are classified into a high-melting-point polypropylene-based resin, a medium-melting-point polypropylene-based resin, or a low-melting-point polypropylene-based resin on the basis of a value obtained by rounding off to the nearest whole number. Each of the high-melting-point polypropylene-based resin, the medium-melting-point polypropylene-based resin, and the low-melting-point polypropylene-based resin may be only one polypropylene-based resin, or may be two or more different polypropylene-based resins.

When the surface layer B and the surface layer C each contain a medium-melting-point polypropylene-based resin in a content of 25% by mass or more and 85% by mass or less, adhesiveness to a printed layer, a vapor deposition layer, a coating layer, or the like can be further enhanced. By increasing the adhesiveness of both surfaces of the surface layer B and the surface layer C, the laminated body obtained by laminating other members on both surfaces of the biaxially oriented polypropylene film can dramatically increase the peel strength. When the medium-melting-point polypropylene-based resin has a melting point of 158°C or less, adhesiveness to the functional layer can be enhanced. When the melting point is 130°C or more, roughness of the film surface can be controlled even when the longitudinal stretching temperature is increased during film formation, and falling off of the anti-blocking agent can be suppressed by increasing the longitudinal stretching temperature. The medium-melting-point polypropylene-based resin preferably has a melting point of 134°C or more and 150°C or less, and more preferably has a melting point of 138°C or more and 143°C or less. When the content of the medium-melting-point polypropylene-based resin is 25% by mass or more, adhesiveness to a heat-sealable film, a printed layer, a vapor deposition layer, a coating layer, or the like can be enhanced. When the content of the medium-melting-point polypropylene-based resin is 85% by mass or less, productivity can be secured when a film is formed, roughening of the film surface can be suppressed, and film formation stability is improved. The surface layer B and the surface layer C each more preferably contain the medium-melting-point polypropylene-based resin in a content of 30% by mass or more and 80% by mass or less, and still more preferably 35% by mass or more and 75% by mass or less.

On the other hand, the surface layer B and the surface layer C each preferably contain a high-melting-point polypropylene-based resin in order to maintain the thermal dimensional stability and the mechanical strength of the biaxially stretched polypropylene film. The melting point of the high-melting-point polypropylene-based resin is 159°C or more and 175°C or less, preferably 160°C or more and 170°C or less, and more preferably 161°C or more and 165°C or less. The surface layer B and the surface layer C each preferably contain the high-melting-point polypropylene-based resin in a content of 15% by mass or more and 75% by mass or less, more preferably 20% by mass or more and 70% by mass or less, and still more preferably 25% by mass or more and 65% by mass or less.

The total content of the high-melting-point polypropylene-based resin and the medium-melting-point polypropylene-based resin is preferably 60 to 100% by mass, more preferably 70 to 100% by mass, still more preferably 80 to 100% by mass, further preferably 90 to 100% by mass, particularly preferably 95 to 100% by mass, and most preferably 98 to 100% by mass based on all the resins contained in the surface layer B and the surface layer C.

Hereinafter, various suitable physical properties of the medium-melting-point polypropylene-based resin and the high-melting-point polypropylene-based resin will be described. When two or more different polypropylene-based resins are used as the medium-melting-point polypropylene-based resin, the value obtained by mass-averaging the physical properties of each polypropylene-based resin is preferably in the numerical range described later. When two or more different polypropylene-based resins are used as the high-melting-point polypropylene-based resin, the value obtained by mass-averaging the physical properties of each polypropylene-based resin is preferably in the numerical range described later.

The melt flow rate (MFR; 230°C, 2.16 kgf) of the medium-melting-point polypropylene-based resin is preferably 2.0 g/10 min or more and 10 g/10 min or less. The melt flow rate is more preferably 3.0 g/10 min or more and 8.0 g/10 min or less, and still more preferably 4.0 g/10 min or more and 7.0 g/10 min or less. The melt flow rate (MFR; 230°C, 2.16 kgf) of the high-melting-point polypropylene-based resin is preferably 2.0 g/10 min or more and 10 g/10 min or less, and more preferably 3.0 g/10 min or more and 6.0 g/10 min or less. In addition, the difference between the MFR of the medium-melting-point polypropylene-based resin and the MFR of the high-melting-point polypropylene-based resin is preferably 2.0 g/10 min or less, and more preferably 1.5 g/10 min or less.

The medium-melting-point polypropylene-based resin preferably has a weight average molecular weight (Mw) of 180,000 to 500,000. The Mw is more preferably 190,000 to 320,000, still more preferably 200,000 to 300,000, and particularly preferably 230,000 to 260,000. When the Mw is less than 180,000, the melt viscosity is low, so that the material is not stable during casting, and the film formability may be deteriorated. When the Mw exceeds 500,000, the amount of components having a molecular weight of 100,000 or less is excessively small, so that the heat shrinkage rate at a high temperature may increase.

The high-melting-point polypropylene-based resin preferably has an Mw of 180,000 to 500,000. The Mw is more preferably 210,000 to 400,000, still more preferably 240,000 to 350,000, and particularly preferably 270,000 to 320,000. When the Mw is less than 180,000, the melt viscosity is low, so that the material is not stable during casting, and the film formability may be deteriorated. When the Mw exceeds 500,000, the amount of components having a molecular weight of 100,000 or less is excessively small, so that the heat shrinkage rate at a high temperature may increase. The Mw of the high-melting-point polypropylene-based resin is preferably larger than the Mw of the medium-melting-point polypropylene-based resin.

The medium-melting-point polypropylene-based resin preferably has a number average molecular weight (Mn) of 20,000 to 200,000. The Mn is more preferably 30,000 to 80,000, still more preferably 40,000 to 70,000, and particularly preferably 45,000 to 55,000. When the Mn is less than 20,000, the melt viscosity is low, so that the material is not stable during casting, and the film formability may be deteriorated. When the Mn exceeds 200,000, the heat shrinkage rate at a high temperature may be high.

The Mn of the high-melting-point polypropylene-based resin is preferably 20,000 to 200,000. The Mn is more preferably 30,000 to 80,000, still more preferably 40,000 to 70,000, and particularly preferably 50,000 to 60,000. When the Mn is less than 20,000, the melt viscosity is low, so that the material is not stable during casting, and the film formability may be deteriorated. When the Mn exceeds 200,000, the heat shrinkage rate at a high temperature may be high. The Mn of the high-melting-point polypropylene-based resin is preferably larger than the Mn of the medium-melting-point polypropylene-based resin.

The molecular weight distribution (Mw/Mn) of the medium-melting-point polypropylene-based resin is preferably 2.8 or more and 10 or less, more preferably 3.2 or more and 9.0 or less, still more preferably 3.5 or more and 9.0 or less, particularly preferably 4.0 or more and 8.0 or less, and most preferably 4.5 or more and 6.0 or less. The molecular weight distribution (Mw/Mn) of the high-melting-point polypropylene-based resin is preferably 2.8 or more and 10 or less, more preferably 3.2 or more and 9.0 or less, still more preferably 3.5 or more and 9.0 or less, particularly preferably 3.7 or more and 8.0 or less, and most preferably 4.0 or more and 6.0 or less. The Mw/Mn of the high-melting-point polypropylene-based resin is preferably larger than the Mw/Mn of the medium-melting-point polypropylene-based resin.

The high-melting-point polypropylene-based resin, the medium-melting-point polypropylene-based resin, and the low-melting-point polypropylene-based resin are obtained by polymerizing propylene as a raw material using, for example, a publicly-known catalyst such as a Ziegler-Natta catalyst or a metallocene catalyst. For example, to obtain a medium-melting-point polypropylene-based resin, propylene may be copolymerized with ethylene, an α-olefin having 4 or more carbon atoms, or both of them, or a polypropylene-based resin having a reduced stereoregularity depending on a catalyst to be used may be used, but a medium-melting-point polypropylene-based resin can be obtained without copolymerizing propylene with ethylene, an α-olefin having 4 or more carbon atoms, or both of them. The content of the α-olefin component other than propylene in the medium-melting-point polypropylene-based resin (specifically, the total amount of ethylene and the α-olefin having 4 or more carbon atoms) is preferably 0 to 15 mol%, and more preferably 2 to 10 mol%. Specifically, the medium-melting-point polypropylene-based resin is preferably a propylene-ethylene-butene copolymer. The propylene-ethylene-butene copolymer contains at least a propylene constitutional unit, an ethylene constitutional unit, and a butene constitutional unit. Similarly, the content of the α-olefin component other than propylene in the low-melting-point polypropylene-based resin is preferably 0 to 15 mol%, and more preferably 2 to 10 mol%. Preferably, the low-melting-point polypropylene-based resin is specifically a propylene-ethylene copolymer. The propylene-ethylene copolymer contains at least a propylene constitutional unit and an ethylene constitutional unit. The high-melting-point polypropylene-based resin is preferably a polypropylene homopolymer. The polypropylene homopolymer is a polypropylene that contains substantially no α-olefin component other than propylene, specifically, a polypropylene copolymer containing more than 0% and 1 mol% or less of an α-olefin component other than propylene and 99 mol% or more of propylene as constitutional units, or a polypropylene that contains no component other than propylene as constitutional units.

From the viewpoint of imparting slipperiness and an anti-blocking property to the surface layer B, the surface layer C, or both the surface layer B and the surface layer C, it is preferable that the surface layer B, the surface layer C, or both the surface layer B and the surface layer C contain an anti-blocking agent. In addition, the surface layer B, the surface layer C, or both the surface layer B and the surface layer C may contain another additive other than the anti-blocking agent, or may contain another resin other than the polypropylene-based resin. Examples of the other additive include an antioxidant, an ultraviolet absorber, a nucleating agent, a pressure-sensitive adhesive, an antifogging agent, a flame retardant, an inorganic or organic filler, or a mixture thereof. Examples of the other resin include polyolefin-based resins other than the polypropylene-based resin to be used in the surface layer B, the surface layer C, or both the surface layer B and the surface layer C, and various elastomers. These may be successively polymerized using a multi-stage reactor, or may be blended with a polypropylene-based resin using a Henschel mixer. Alternatively, master pellets prepared in advance using a melt-kneader may be diluted with polypropylene into a prescribed concentration, or the entirety may be melt-kneaded in advance before use. The total content of the high-melting-point polypropylene-based resin and the medium-melting-point polypropylene-based resin is preferably 70 to 100% by mass, more preferably 80 to 100% by mass, still more preferably 90 to 100% by mass, particularly preferably 95 to 100% by mass, and most preferably 98 to 100% by mass based on all the resins contained in the surface layer B, the surface layer C, or both the surface layer B and the surface layer C.

The anti-blocking agent is preferably particles having a pore volume of 0.2 mL/g to 3 mL/g, more preferably particles having a pore volume of 0.5 mL/g to 2.5 mL/g, and still more preferably particles having a pore volume of 1.1 mL/g to 1.8 mL/g. As the anti-blocking agent, for example, one appropriately selected from among inorganic particles and organic particles can be used. Among them, it is particularly preferable to use a silicon compound. Examples of the silicon compound include silica, silicates, a compound having a backbone formed by siloxane linkages, or a mixture thereof. Particularly, particles of porous silica are preferable. The porous silica preferably has a pore volume of 0.8 mL/g to 2 mL/g, and more preferably 1.1 mL/g to 1.8 mL/g. The shape of the particles may be a spherical shape or an indefinite shape, but an indefinite shape is preferably used. The average particle size of the particles is preferably 1 µm or more and 5 µm or less, and more preferably 2 µm or more and 4 µm or less. The average particle size is determined by photographing the particles with a scanning electron microscope, measuring the Feret diameter in the horizontal direction using an image analyzer device, and taking the average value thereof. The use of the anti-blocking agent described above is preferable from the viewpoint that the falling-off rate of an anti-blocking agent can be reduced and staining of a guide roll can be controlled.

The content of the anti-blocking agent is preferably 100 ppm or more and 10,000 ppm or less, more preferably 300 ppm or more and 6000 ppm or less, still more preferably 800 ppm or more and 4000 ppm or less, and particularly preferably 1200 ppm or more and 2700 ppm or less in the total mass of the surface layer B, the surface layer C, or both the surface layer B and the surface layer C. Within the above range, the three-dimensional average roughness of the surface layer B, the surface layer C, or both the surface layer B and the surface layer C can be adjusted within a prescribed range described later. Setting the content of the anti-blocking agent to 100 ppm or more makes it possible to obtain a film excellent in slipperiness and blocking resistance. Setting the content of the anti-blocking agent to 10,000 ppm or less makes it possible to reduce falling off of the anti-blocking agent and control staining of a guide roll. In addition, light transmissiveness is less prone to deteriorate, and when a functional layer is laminated, the anti-blocking agent is less prone to penetrate the functional layer, or the anti-blocking agent protruding from the surface layer B, the surface layer C, or both the surface layer B and the surface layer C is less prone to cause the functional layer formed in the vicinity of the surface layer B to be sparse, so that deterioration in barrier properties and defective adhesiveness are unlikely to occur.

The falling-off rate of the anti-blocking agent in the surface layer B and the surface layer C is 10% or less, preferably 8% or less, more preferably 6% or less, and still more preferably 4% or less. When the falling-off rate is 10% or less, it is possible to control staining of a guide roll in post-processing such as coating and vapor deposition. In addition, generation of voids due to falling off of the anti-blocking agent can be suppressed, and when a metal, a metal oxide, or both are deposited, a laminated body excellent in gas barrier properties can be obtained. The lower limit of the falling-off rate is not particularly limited, but is, for example, 0.3% or more. The falling-off rate of the anti-blocking agent can be set within the above range by adjusting film formation conditions as well as the type, pore volume, particle size, content, etc. of the anti-blocking agent.

### (3) Layer configuration and thickness configuration of biaxially oriented polypropylene film

When the biaxially oriented polypropylene film has the surface layer B on one side of the base material layer A, the surface layer B may be directly laminated on the surface of the base material layer A, or another layer may be interposed between the base material layer A and the surface layer B. When the biaxially oriented polypropylene film has the surface layer C on the other side of the base material layer A, the surface layer C may be directly laminated on the surface of the base material layer A, or another layer may be interposed between the base material layer A and the surface layer C. For example, the biaxially oriented polypropylene film may have a three-layer structure of only surface layer B/base material layer A/surface layer C, or a multilayer structure composed of four or more layers including a layer other than the base material layer A, the surface layer B, and the surface layer C. Examples of a four-layer structure include surface layer B/intermediate layer D/base material layer A/surface layer C, and examples of a five-layer structure include surface layer B/intermediate layer D/base material layer A/intermediate layer D/surface layer C. By providing the intermediate layer D, the adhesive force between the base material layer A and the surface layer B, the surface layer C, or both the surface layer B and the surface layer C can be enhanced.

The overall thickness of the biaxially oriented polypropylene film is preferably 5 to 100 µm, more preferably 10 to 80 µm, and still more preferably 18 to 50 µm. Within the above range, the film has sufficient stiffness, and is suitable as a base material for packaging or industrial use.

The thicknesses of the surface layer B and the surface layer C are preferably 0.3 µm to 10 µm, more preferably 0.5 µm to 3 µm, and still more preferably 0.8 µm to 2 µm. When both the thicknesses are 0.3 µm or more, adhesiveness between the surface layer B and the surface layer C and the functional layer can be enhanced, and the biaxially oriented polypropylene film is suitable as a base material for packaging or industrial use in which it is necessary to provide a functional layer by vapor deposition processing, coating processing, or the like. When the thickness of the surface layer B is more than 10 µm, the thickness ratio of the base material layer A may be relatively low, and as a result, the stiffness and the thermal dimensional stability of the film may be deteriorated.

The thickness of the base material layer A is preferably 5 to 90 µm, more preferably 10 to 50 µm, and still more preferably 15 to 30 µm. When the thickness is 5 µm or more, the thermal dimensional stability and the mechanical strength of the film can be enhanced. When the thickness of the base material layer A is more than 90 µm, the thermal dimensional stability and the mechanical strength can be enhanced, but the effect may be saturated.

### (4) Method for producing biaxially oriented polypropylene film

The biaxially oriented polypropylene film can be obtained by melt-extruding the polypropylene-based resin compositions for constituting the base material layer A, the surface layer B, and the surface layer C by separate extruders, co-extruding the compositions through a die, cooling the co-extrudate with a chill roll to form an unstretched sheet, stretching the unstretched sheet in the longitudinal direction (MD) and the width direction (TD), and then subjecting the resulting stretched sheet to a heat-setting treatment.

The melt-extrusion temperature is preferably approximately 200 to 280°C, and to obtain a film having a good appearance without disturbing layers when the layer A, the layer B and the layer C are co-extruded within this temperature range, the difference between the MFR of the base material layer A and the MFRs of the surface layer B and the surface layer C (hereinafter, referred to as MFR difference) is preferably 5.0 g/10 min or less. When the MFR difference is more than 5.0 g/10 minutes, the layers are disturbed and the appearance tends to be poor. The MFR difference is more preferably 4.0 g/10 min or less, and still more preferably 3.0 g/10 min or less. When the biaxially oriented polypropylene has the surface layer C, the difference between the maximum MFR and the minimum MFR among the MFRs of the three polypropylene-based resin compositions constituting the base material layer A, the surface layer B, and the surface layer C is preferably 5.0 g/10 min or less, and more preferably 3.0 g/10 min or less.

The surface temperature of the chill roll is preferably 20 to 50°C, more preferably 30 to 40°C, and still more preferably 30 to 35°C. When the chill roll temperature is 50°C or less, crystallization of the unstretched sheet and growth of spherulites can be suppressed, so that a high stretch ratio can be attained, and therefore a film having a high tensile modulus of elasticity can be obtained. In addition, generation of large irregularities on the surface derived from spherulites can be suppressed, and a film having an appropriate surface roughness can be obtained.

The lower limit of the stretch ratio in the longitudinal direction (MD) is preferably 3.5 times or more, and more preferably 4 times or more. When the lower limit of the stretch ratio in MD is 3.5 times or more, unevenness in thickness can be reduced. The upper limit of the stretch ratio in MD is preferably 8 times or less, and more preferably 7 times or less. When the stretch ratio in MD is 8 times or less, breakage is less prone to occur in the TD stretching to be subsequently conducted, and the biaxially oriented polypropylene film is easily produced.

The lower limit of the stretching temperature in MD is preferably 120°C or more, more preferably 130°C or more, and still more preferably 135°C or more. When the stretching temperature in MD is 120°C or more, large unevenness in thickness is hardly produced, and the surface roughness of the film hardly occurs. When the stretching temperature in MD is higher, voids are less prone to be formed around anti-blocking agent particles, and staining of a roll during processing due to falling off of the anti-blocking agent particles on the film surface can be prevented. In addition, when aluminum is deposited, good gas barrier properties are obtained.

The upper limit of the stretching temperature in MD is preferably 150°C or less, more preferably 145°C or less, and still more preferably 140°C or less. If the stretching temperature in MD is excessively high, the film starts to stick to the stretching roll in MD and stick-slip occurs, so that unevenness or surface roughness may occur in the film. Further, when the stretching temperature in MD is further increased, the film may stick to the stretching roll and become unable to be stretched.

The lower limit of the stretch ratio in the width direction (TD) is preferably 6 times or more, more preferably 7 times or more, and still more preferably 8 times or more. When the stretch ratio in TD is 6 times or more, the unevenness in thickness is less prone to be large. The upper limit of the stretch ratio in TD is preferably 15 times or less, more preferably 13 times or less, and still more preferably 11 times or less. When the stretch ratio in TD exceeds the above-mentioned value, there is a possibility that a high heat shrinkage rate is exhibited, or the frequency of breakage during stretching increases.

It is preferable to heat a uniaxially stretched film after stretching in the longitudinal direction, and sufficiently soften the polypropylene-based resin composition before the stretching step in the width direction. The heating temperature in the preheating step is preferably 160°C or more and 180°C or less, and more preferably 165°C or more and 175°C or less. When the heating temperature in the preheating step is adjusted to 160°C or more, softening proceeds and stretching in the width direction is facilitated. The lower limit of the stretching temperature in TD is preferably 150°C or more, more preferably 152°C or more, still more preferably 154°C or more, and particularly preferably 156°C or more. When the stretching temperature in TD is 150°C or more, the film is easily softened sufficiently, is hardly broken, and is hardly increased in heat shrinkage rate. The upper limit of the stretching temperature in TD is preferably 170°C or less, more preferably 168°C or less, and still more preferably 166°C or less.

To lower the heat shrinkage rate, the heat-setting temperature is preferably higher, more preferably 160°C or more, and still more preferably 162°C or more. When the heat-setting temperature is 160°C or more, the heat shrinkage rate is less prone to be high. The upper limit of the heat-setting temperature is preferably 180°C or less, and more preferably 175°C or less. When the heat-setting temperature is 180°C or less, surface roughness and whitening of the film hardly occur.

It is preferable to relax the film at the time of heat-setting. The lower limit of the relaxation rate is preferably 2% or more, more preferably 3% or more, and still more preferably 5% or more. When the relaxation rate is 2% or more, the heat shrinkage rate is less prone to be high. The upper limit of the relaxation rate is preferably 10% or less, and more preferably 8% or less. When the relaxation rate is 10% or less, the unevenness in thickness is less prone to be large.

Furthermore, to reduce the heat shrinkage rate, the film produced in the above step may be once wound into a roll form and then annealed offline.

The film thus obtained is subjected to corona discharge, plasma treatment, flame treatment, or the like, as necessary, and then wound with a winder, whereby a biaxially oriented polypropylene film roll can be obtained. The method for producing a biaxially oriented polypropylene film is not limited to the production method described above.

### (5) Various properties of biaxially oriented polypropylene film (Haze)

The haze of the biaxially oriented polypropylene film is preferably 8% or less, more preferably 5% or less, still more preferably 4% or less, and particularly preferably 3% or less. Within the above range, the biaxially oriented polypropylene film is easily used in applications requiring transparency. The haze tends to deteriorate when the stretching temperature and the heat-setting temperature are excessively high, when the chill roll temperature is high and the cooling rate of the unstretched (unprocessed) sheet is slow, when the content of low-molecular-weight components having a molecular weight of 100,000 or less is excessively large, and the like, and the haze can be adjusted within the above range by adjusting these conditions.

### (Tensile modulus of elasticity)

The tensile modulus of elasticity of the biaxially oriented polypropylene film in the longitudinal direction is preferably 1.0 GPa or more, more preferably 1.5 GPa or more, still more preferably 1.8 GPa or more, and particularly preferably 2.0 GPa or more. The upper limit thereof is not particularly limited, and is, for example, 5.0 GPa or less. The tensile modulus of elasticity of the biaxially oriented polypropylene film in the width direction is preferably 3.0 GPa or more, more preferably 3.2 GPa or more, and still more preferably 3.5 GPa or more. The upper limit thereof is not particularly limited, and is, for example, 10 GPa or less. The sum of the tensile moduli of elasticity in the longitudinal direction and in the width direction of the biaxially oriented polypropylene film is preferably 5.8 to 12.0 GPa, and more preferably 6.0 to 10.0 GPa. When the tensile modulus of elasticity is in the above range, the film has enhanced stiffness, the film can be used even if the film is thin, and the cost can be reduced. The "longitudinal direction" of the biaxially oriented polypropylene film is a direction corresponding to the machine direction in the film production process, the "width direction" is a direction orthogonal to the machine direction in the film production process, and the same applies hereinafter.

### (Heat shrinkage rate)

The heat shrinkage rate of the biaxially oriented polypropylene film in the longitudinal direction at 150°C is preferably 10.0% or less, more preferably 9.0% or less, still more preferably 7.0% or less, and particularly preferably 5.0% or less. Within the above range, the biaxially oriented polypropylene film can be used also in applications where the biaxially oriented polypropylene film may be exposed to high temperatures. In addition, even when a functional layer is laminated on the film, it is possible to suppress deterioration of the barrier properties of the functional layer, and as a result, it is possible to enhance the barrier properties of the laminated body. The lower limit of the heat shrinkage rate of the biaxially oriented polypropylene film in the longitudinal direction at 150°C is preferably 0%. From the viewpoint of productivity in production, the heat shrinkage rate is preferably 1% or more, and more preferably 3% or more. The heat shrinkage rate of the biaxially oriented polypropylene film in the width direction at 150°C is 15.0% or less, more preferably 10.0% or less, still more preferably 8.0% or less, and particularly preferably 5% or less. The lower limit of the heat shrinkage rate in the width direction at 150°C is -5%, and preferably 0%. From the viewpoint of productivity in production, the lower limit of the heat shrinkage rate in the width direction at 150°C is preferably 3%, and more preferably 5%. Within the above range, the biaxially oriented polypropylene film can be used also in applications where the biaxially oriented polypropylene film may be exposed to high temperatures. In addition, even when a functional layer is laminated on the film, it is possible to suppress deterioration of the barrier properties of the functional layer, and as a result, it is possible to enhance the barrier properties of the laminated body. The sum of the heat shrinkage rates in the longitudinal direction and in the width direction of the biaxially oriented polypropylene film at 150°C is preferably 25.0% or less, more preferably 23.0% or less, still more preferably 20.0% or less, further preferably 15.0% or less, and particularly preferably 12.0% or less. The lower limit of the sum of the heat shrinkage rates in the longitudinal direction and in the width direction at 150°C is 0% or more. From the viewpoint of productivity in production, the lower limit of the sum of the heat shrinkage rates is preferably 4%, and more preferably 8%. Within the above range, the biaxially oriented polypropylene film can be used also in applications where the biaxially oriented polypropylene film may be exposed to high temperatures. In addition, even when a functional layer is laminated on the film, it is possible to suppress deterioration of the barrier properties of the functional layer, and as a result, it is possible to enhance the barrier properties of the laminated body.

### (Three-dimensional average roughness)

The lower limit of the three-dimensional average roughness SRa of the surface layer B, the surface layer C, or both the surface layer B and the surface layer C of the biaxially oriented polypropylene film is preferably 15 nm. The lower limit of the three-dimensional average roughness is more preferably 20 nm, still more preferably 25 nm, and further preferably 30 nm. When the three-dimensional average roughness of the surface layer B, the surface layer C, or both the surface layer B and the surface layer C is 15 nm or more, the slipperiness of the film is good, and the occurrence of wrinkles can be suppressed during winding as a roll or post-processing such as vapor deposition processing. The upper limit of the three-dimensional average roughness of the surface layer B, the surface layer C, or both the surface layer B and the surface layer C is preferably 100 nm. When the three-dimensional average roughness is 100 nm or less, the transparency of the film is good, and it is possible to suppress deterioration of workability due to excessive slippage of the film at the time of winding the film as a roll or in post-processing such as vapor deposition processing. The three-dimensional average roughness SRa can be controlled by adjusting the type, particle size, and blending amount of the anti-blocking agent, and film formation conditions. When gas barrier properties are imparted by vapor deposition to a biaxially oriented polypropylene film, the gas barrier properties of the vapor deposition layer can be improved by making the surface projections of the surface to be subjected to vapor deposition smaller and smoothening the surface, and the slipperiness and an anti-blocking property can be imparted by making the surface projections of the other surface larger. In this case, the three-dimensional average roughness SRa of the surface to be subjected to vapor deposition may be less than 15 nm.

### (Falling-off rate of anti-blocking agent)

The falling-off rate of the anti-blocking agent in the surface layer B and the surface layer C is 10% or less, preferably 8% or less, more preferably 6% or less, and still more preferably 4% or less. When the falling-off rate is 10% or less, it is possible to control staining of a guide roll in post-processing such as coating and vapor deposition. In addition, generation of voids due to falling off of the anti-blocking agent can be suppressed, and when a metal, a metal oxide, or both are deposited, a laminated body excellent in gas barrier properties can be obtained. The lower limit of the falling-off rate is not particularly limited, but is, for example, 0.3% or more.

### (Wetting tension)

The wetting tension of the surface layer B, the surface layer C, or both the surface layer B and the surface layer C of the biaxially oriented polypropylene film is preferably 36 mN/m or more, more preferably 38 mN/m or more, and still more preferably 40 mN/m or more. The wetting tension may be appropriately set depending on the type of the functional layer provided on the surface layer B, the surface layer C, or both the surface layer B and the surface layer C. When an inorganic thin film layer such as an aluminum thin film layer is formed by a heating vapor deposition method or the like, adhesiveness to the inorganic vapor deposition layer or the like is easily improved by setting the surface to 36 mN/m or more. Similarly, when a heat-sealable film sealant film is bonded onto the surface layer B, the surface layer C, or both the surface layer B and the surface layer C, the wetting tension may be appropriately set depending on the type of the adhesive or the like to be used for bonding, but when the wetting tension is 36 mN/m or more, the adhesiveness is easily improved. To set the wetting tension to 36 mN/m or more, a surface treatment such as a corona treatment, a flame treatment, or an anchor coating treatment can be conducted. If the wetting tension is excessively high, the slipperiness and the anti-blocking property may be deteriorated, and therefore the wetting tension is preferably 46 mN/m or less.

### (Surface resistance value)

The surface resistance values of the surface layer B and the surface layer C of the biaxially oriented polypropylene film are preferably 14 Log Ω or more, more preferably 14.5 Log Ω or more, and still more preferably 15 Log Ω or more. When the film contains an additive such as an antistatic agent, or an impurity, the additive or the impurity may bleed out to the film surface by a surface treatment, leading to deterioration of adhesiveness. When the surface resistance value is 14 Log Ω or more, the amount of bleeding out of an additive or the like to a film surface is small, which is preferable from the viewpoint of adhesiveness to a functional layer. The preferred upper limits of the surface resistance values of the surface layer B and the surface layer C are not particularly limited, but are 18 Log Ω or less in terms of production.

### (Coefficient of dynamic friction)

The coefficient of dynamic friction of the biaxially oriented polypropylene-based film is preferably 0.5 or less, more preferably 0.48 or less, and particularly preferably 0.45 or less. When the coefficient of dynamic friction is 0.5 or less, the film can be smoothly unwound from the film roll, and printing processing is easily conducted. The coefficient of dynamic friction of the biaxially oriented polypropylene-based film can be adjusted by the raw material composition and the film formation conditions. In particular, it can be adjusted by the amount or particle size of the anti-blocking agent blended in the surface layer B, the surface layer C, or both the surface layer B and the surface layer C. The coefficient of dynamic friction of the biaxially oriented polypropylene-based film is a coefficient of dynamic friction attained when the surface layer B and the surface layer C are brought into contact with each other, and can be measured by the method described in Examples.

### (6) Laminated body

The laminated body of the embodiment has the biaxially oriented polypropylene film of any of the embodiments described above. It is preferable that the laminated body further has a heat-sealable polyolefin film, and the surface layer B, the base material layer A, the surface layer C, and the heat-sealable polyolefin film are laminated in this order. It is preferable that the laminated body further has a functional layer, and the functional layer, the surface layer B, the base material layer A, the surface layer C, and the heat-sealable polyolefin film are laminated in this order. The functional layer is preferably a printed layer, a vapor deposition layer, or a coating layer. It is more preferable that the laminated body further has a heat-sealable polyolefin film, and the functional layer, the surface layer B, the surface layer A, the surface layer C, and the heat-sealable polyolefin film are laminated in this order. It is more preferable that the laminated body further has a stretched polyolefin film or a stretched polyester film, and the stretched polyolefin film or the stretched polyester film, the functional layer, the surface layer B, the surface layer A, the surface layer C, and the heat-sealable polyolefin film are laminated in this order. Hereinafter, the functional layer, the heat-sealable film, and the stretched film of the laminated body will be described in order.

### (7) Functional layer

The biaxially oriented polypropylene film is not limited to be used for packaging, and can be used for industrial use. When it is intended to improve the gas barrier properties and design property of the biaxially oriented polypropylene film, a laminated body provided with functional layers such as a printed layer, a vapor deposition layer, and a coating layer may be formed.

The biaxially oriented polypropylene film may be provided with a printed layer. As an ink to be used, an aqueous ink is preferable in an environmental aspect. When an aqueous ink is used, it is necessary that cissing of the printed layer does not occur (printability) and adhesiveness to a film is sufficient. The biaxially oriented polypropylene film is excellent in printability and adhesiveness of an aqueous ink. When gravure printing with an aqueous ink is conducted on the surface of the film, the shape of the printed dots is observed, and the dot size and the degree of ink cissing are evaluated, it is preferable that the dot size is even, and it is more preferable that the dot size is even and there is no cissing.

When it is intended to enhance the gas barrier properties, it is preferable to laminate a vapor deposition layer, a coating layer, or both a vapor deposition layer and a coating layer on the biaxially oriented polypropylene film. The production of the vapor deposition layer is not particularly limited as long as it is a publicly-known method such as PVD methods (physical vapor deposition methods) such as a vacuum vapor deposition method, a sputtering method, and an ion plating method, or CVD methods (chemical vapor deposition methods), but the physical vapor deposition method is preferable, and the vacuum vapor deposition method is more preferable. For example, in the vacuum vapor deposition method, aluminum, Al₂O₃, SiOₓ (X < 2), a mixture of Al₂O₃ and SiO₂, a mixture of Al and SiO₂, or the like can be used as a deposition material, and as a heating method, a publicly-known method such as resistance heating, high frequency induction heating, electron beam heating, or the like can be used. Oxygen, nitrogen, water vapor, or the like may be introduced as a reactant gas, and reactive vapor deposition using such means as ozone addition and ion assistance may be employed. The preparation conditions may be changed as long as the object of the present disclosure is not impaired, for example, a bias or the like may be applied to the biaxially oriented polypropylene film, or the temperature of the biaxially oriented polypropylene film may be raised or lowered. This applies also to other production methods such as the sputtering method and the CVD methods.

When a vapor deposition layer is provided on the biaxially oriented polypropylene film, the vapor deposition layer preferably contains a metal, a metal oxide, or both a metal and a metal oxide, more preferably contains aluminum, Al₂O₃, SiOx (X < 2), a mixture of Al₂O₃ and SiO₂, or a mixture of Al and SiO₂, and still more preferably contains aluminum or a mixture of Al and SiO₂. The thickness of the vapor deposition layer is preferably 5 to 40 nm, and more preferably 10 to 30 nm. When a metal or an inorganic oxide is vapor-deposited, it is preferable to vapor-deposit the metal or the inorganic oxide on the side where the surface roughness of the biaxially oriented polypropylene film is smaller.

Examples of the material of the coating layer for enhancing the gas barrier properties include polyvinylidene chloride, nylon, a butanediol-vinyl alcohol copolymer, an ethylene-vinyl alcohol copolymer, and polyvinyl alcohol. In the case of a coating layer, the coating amount after drying is preferably 0.03 to 3 g/m², and more preferably 0.1 to 0.3 g/m².

The upper limit of the oxygen transmission rate at a temperature of 23°C and a relative humidity of 65% of a laminated body in which an inorganic thin film layer or a coating layer is provided on a biaxially oriented polypropylene film is preferably 50 mL/m²/day/MPa, more preferably 39 mL/m²/day/MPa, still more preferably 30 mL/m²/day/MPa, and particularly preferably 25 mL/m²/day/MPa. When the upper limit of the oxygen transmission rate is 50 mL/m²/day/MPa, the laminate is excellent in preservability of substances and foods which are to be deteriorated by oxygen. The lower limit of the oxygen transmission rate of the vapor deposition film at a temperature of 23°C and a relative humidity of 65% is not particularly limited, but the lower limit is preferably 0.1mL/m²/day/MPa from the viewpoint of productivity. In the laminated body in which the inorganic thin film layer is provided on the biaxially oriented polypropylene film, it is preferable that the adhesiveness at the interface between the inorganic thin film layer or the coating layer and the biaxially oriented polypropylene film is high, and when the adhesiveness is high, the oxygen transmission rate described above can be controlled to be low. Regarding the adhesiveness at the interface between the inorganic thin film layer or the coating layer and the biaxially oriented polypropylene film, when an adhesive tape is attached to the inorganic thin film layer and the degree of peeling of the inorganic thin film layer or the coating layer is evaluated by a 90° peeling method, it is preferable that the inorganic thin film layer or the coating layer is only partially peeled off, and it is more preferable that the inorganic thin film layer or the coating layer is not peeled off.

The adhesiveness between the vapor deposition layer and the base material layer of the vapor deposition film provided with the vapor deposition layer is preferably high, and when the adhesiveness is high, the oxygen transmission rate described above can be controlled to be low. As to the adhesiveness of the vapor deposition layer, an adhesive tape is attached to the vapor deposition layer of the film, and the degree of peeling of the vapor deposition layer can be evaluated by a 90° peeling method. In addition, evaluation can be made by measuring the oxygen transmission rate after the vapor-deposited surface of the vapor deposition film is subjected to a wear test, but it is preferable that the aluminum vapor deposition layer is not partially peeled off, and it is more preferable that the aluminum vapor deposition layer is not peeled off.

The biaxially oriented polypropylene film may be provided with a printed layer. As an ink to be used, an aqueous ink is preferable in an environmental aspect. When an aqueous ink is used, it is necessary that cissing of the printed layer does not occur (printability) and adhesiveness to a film is sufficient. The biaxially oriented polypropylene film is excellent in printability and adhesiveness of an aqueous ink.

### (8) Heat-sealable film, stretched film

The biaxially oriented polypropylene film or a laminated body in which a printed layer, an inorganic thin film layer, or a coating layer is provided on the biaxially oriented polypropylene film may be processed into a packaging bag or the like as a heat-sealable laminated body including a heat-sealable film laminated. The heat-sealable film to be laminated on the biaxially oriented polypropylene film is preferably a heat-sealable polyolefin film. When both surfaces of the biaxially oriented polypropylene film are excellent in adhesiveness, it is preferable to use the biaxially oriented polypropylene film as a part of a laminated body having a heat-sealable polyolefin film on the outermost surface side. In particular, the biaxially oriented polypropylene film is preferably used as a part of a laminated body further including a stretched polyolefin film or a stretched polyester film disposed on a surface opposite from a surface on which the heat-sealable polyolefin film is disposed. For example, the biaxially oriented polypropylene film is preferably used as a base material in a laminated body composed of a base material for a front printed layer/a heat-sealable film, or as a base material of an intermediate layer gas barrier film in a laminated body composed of a base material for back printing/a gas barrier film/a heat-sealable film.

Examples of the heat-sealable film include an unstretched film, a uniaxially stretched film, and a biaxially stretched film made of polyolefin such as low density polyethylene, linear low density polyethylene, and polypropylene, an ethylene-vinyl acetate copolymer, polyester, or a combination thereof. In particular, a heat-sealable polyolefin film being an unstretched film or a uniaxially stretched film made of any of low density polyethylene, linear low density polyethylene, and polypropylene is preferable. Polypropylene is particularly preferable in terms of ease of recycling.

The surface of the biaxially oriented polypropylene film on which the heat-sealable film is laminated may be a surface on either the surface layer B side or the surface layer C side. The heat-sealable film is preferably laminated with an interposition of an adhesive layer. As the adhesive, an ester-based adhesive, a urethane-based adhesive, an acrylic adhesive, a polyethyleneimine-based adhesive, or the like can be used. As a lamination method, a dry lamination method, an extrusion lamination method, a coextrusion method, and the like can be applied.

The biaxially oriented polypropylene film or a laminated body obtained by laminating a functional layer such as a printed layer, an inorganic thin film layer, or a coating layer, and a heat-sealable film on the biaxially oriented polypropylene film can be processed into a packaging bag and used as a packaging container excellent in filling-and-packaging suitability and preservation suitability for various items such as foods and beverages, pharmaceuticals, detergents, shampoos, oils, dentifrices, adhesives, and pressure-sensitive adhesives.

The laminate strength of the biaxially oriented polypropylene film as measured by the measurement method described later is 1.5 N/15 mm or more, preferably 2.0 N/15 mm or more, more preferably 2.5 N/15 mm or more, still more preferably 2.7 N/15 mm or more, and particularly preferably 2.8 N/15 mm or more. The upper limit of the laminate strength is not particularly limited, but 10 N/15 mm or less is sufficient. At this time, the biaxially oriented polypropylene film preferably has a heat-sealable film on the surface layer C side. Furthermore, the laminate strength of a laminated body having a functional layer such as a printed layer, an inorganic thin film layer, or a coating layer on the biaxially oriented polypropylene film as measured by the measurement method described later is 1.5 N/15 mm or more, preferably 2.0 N/15 mm or more, more preferably 2.5 N/15 mm or more, still more preferably 2.7 N/15 mm or more, and particularly preferably 2.8 N/15 mm or more. The upper limit of the laminate strength is not particularly limited, but 10 N/15 mm or less is sufficient. At this time, the laminated body preferably has a heat-sealable film on the surface layer C side.

The biaxially oriented polypropylene film or the laminated body obtained by laminating a functional layer such as a printed layer, an inorganic thin film layer, or a coating layer, and a heat-sealable film on the biaxially oriented polypropylene film hardly allows wrinkles to be formed in a sealed portion even when the heat-sealing temperature is high when the biaxially oriented polypropylene film or the laminated body is processed into a packaging bag. Since the sum of the heat shrinkage rates in the longitudinal direction of the biaxially oriented polypropylene film at 150°C and the heat shrinkage rate in the width direction of the biaxially oriented polypropylene film at 150°C is 0.0% or more and 25.0% or less, wrinkles and deformation of the sealed portion are few and small even when the temperature of a seal bar is increased, so that the bag production speed can be increased.

Examples of the configuration of the laminated body having a functional layer on one surface of the biaxially oriented polypropylene film and having a heat-sealable film on the other surface include a laminated body in which the biaxially oriented polypropylene film of the present disclosure provided with a gas barrier layer as a functional layer is disposed between another biaxially oriented polypropylene film provided with a printed layer and a heat-sealable film such as an unstretched polypropylene film or an unstretched linear low density polyethylene film. Examples thereof include (OPP or PET/printed layer)/adhesive layer/(aluminum or inorganic oxide vapor deposition layer/OPP*)/adhesive layer/(CPP or LLDPE), and (OPP or PET/printed layer)/adhesive layer/(gas barrier coating layer/OPP*)/adhesive layer/(CPP or LLDPE). In addition, the laminated body also may be a laminated body in which a heat-sealable film such as an unstretched polypropylene film or an unstretched linear low density polyethylene film is bonded to the biaxially oriented polypropylene film of the present disclosure provided with a printed layer as a functional layer. Examples thereof include a laminated body to be used as a base material for front printing such as (printed layer/OPP*)/adhesive layer/(CPP or LLDPE). In the above layer configurations, "/" indicates a boundary between different members, and the abbreviations used are as follows.
OPP*: Biaxially oriented polypropylene film of the present disclosure
OPP or PET: General biaxially oriented polypropylene film or biaxially oriented polyethylene terephthalate film
CPP: Unstretched polypropylene film
LLDPE: Linear low density polyethylene film

The present application claims the benefit of the priority based on Japanese Patent Application No. 2024-011278 filed on January 29, 2024 and Japanese Patent Application No. 2024-012919 filed on January 31, 2024. All of the contents of Japanese Patent Application No. 2024-011278 filed on January 29, 2024 and Japanese Patent Application No. 2024-012919 filed on January 31, 2024 are incorporated herein by reference.

### EXAMPLES

Hereinafter, the present disclosure will be described with reference to examples, but the present disclosure is not limited to these examples.

### (Measurement methods)

The physical properties of the raw materials used and the films obtained in Examples and Comparative Examples were measured by the following methods. In the following 1) to 5), the physical properties of the polypropylene-based resins used in the layers were measured, and in 6) to 17), the physical properties of the biaxially oriented polypropylene films were measured. In 18) to 21), evaluations at the time of post-processing such as lamination of another layer such as a functional layer to a biaxially oriented polypropylene film were conducted.

### 1) Melting point

The temperature taken as the melting point (Tm) was a main peak temperature of an endothermic peak associated with melting detected using a DSC8500 differential scanning calorimeter manufactured by PerkinElmer when 5 mg of a sample was filled in an aluminum pan and mounted, melted at 230°C for 5 minutes in a nitrogen atmosphere, cooled to 30°C at a scanning speed of -10°C/min, then held for 5 minutes, and heated at a scanning speed of 10°C/min.

### 2) Mesopentad fraction (mmmm)

The mesopentad fraction was measured using ¹³C-NMR. The mesopentad fraction was calculated in accordance with the method described in "Zambelli et al., Macromolecules, volume 6, page 925 (1973)". ¹³C-NMR measurement was conducted at 110°C with "AVANCE 500" manufactured by BRUKER Corporation by using a solution prepared by dissolving 200 mg of a sample in a mixed liquid of o-dichlorobenzene and deuterated benzene at 8 : 2 (volume ratio) at 135°C.

### 3) Melt flow rate (MFR)

The melt flow rate was measured in accordance with JIS K 7210 at a temperature of 230°C and a load of 2.16 kgf.

### 4) Number average molecular weight (Mn), weight average molecular weight (Mw), and molecular weight distribution (Mw/Mn)

The molecular weight and molecular weight distribution of polypropylene-based resins were determined on the basis of a monodispersed polystyrene by gel permeation chromatography (GPC). The measurement conditions in the GPC measurement, such as column used and solvent, are as follows.
Solvent: 1,2,4-Trichlorobenzene
Column: TSKgel GMHHR-H (20) HT × 3
Flow rate: 1.0 ml/min
Detector: RI
Measurement temperature: 140°C

### 5) Molecular weight, molecular weight distribution

The number average molecular weight (Mn), the weight average molecular weight (Mw), and the molecular weight distribution (Mw/Mn) are each defined by the following formula by the number of molecules (Ni) of the molecular weight (Mi) at each elution position in a GPC curve obtained via a molecular weight calibration curve.
Number average molecular weight: Mn = Σ (Ni ·Mi)/ΣNi
Weight average molecular weight: Mw = Σ (Ni ·Mi²)/Σ (Ni ·Mi)
Molecular weight distribution: Mw/Mn

When the baseline is not clear, the baseline shall be set in a range up to the lowest position of the skirt on the high molecular weight side of the elution peak on the high molecular weight side closest to the elution peak of the standard substance.

### 6) Thickness

A cross section of a film hardened with a modified urethane resin was cut out with a microtome and observed with a differential interference contrast microscope, and the thickness of each layer was measured.

### 7) Haze

The haze of a film was measured at 23°C in accordance with JIS K 7105 using a haze meter (300A manufactured by Nippon Denshoku Industries Co., Ltd.). The measurement was conducted twice, and the average value thereof was obtained.

### 8) Appearance

The film surface was irradiated with BROM LIGHT (VIDEO LIGHT VLG301 100V 300W manufactured by LPL) at about 45 degrees, and the appearance of the film was evaluated by visual observation according to the following criteria.
A: No unevenness that was problematic as a product was observed in appearance.
B: A large amount of uneven transparency due to stick-slip generated on the stretching rolls of the longitudinal direction was observed.
C: A very large amount of uneven transparency due to stick-slip generated on the stretching rolls of the longitudinal direction was observed, which was at a level where the film could not be adopted as a product.

### 9) Tensile modulus of elasticity

A sample sized 10 mm in the width direction and 180 mm in the longitudinal direction was cut out from a film using a razor, and used for measurement. The measurement was conducted in accordance with JIS K 7127; specifically, the sample was left standing for 12 hours in an atmosphere of 23°C and a relative humidity of 65%, and then measured in an atmosphere of 23°C and a relative humidity of 65% under conditions of a distance between chucks of 100 mm and a tensile speed of 200 mm/min, and an average value of five measurement results was calculated and taken as the tensile modulus of elasticity in the longitudinal direction. Autograph AG5000A manufactured by Shimadzu Corporation was used as a measurement device. In addition, a sample sized 180 mm in the width direction and 10 mm in the longitudinal direction was cut out from the film using a razor, and the tensile modulus of elasticity in the width direction was determined by the same measurement method as that for the tensile modulus of elasticity in the longitudinal direction.

### 10) Heat shrinkage rate

Measurement was conducted by the following method in accordance with JIS Z 1712. A film was cut with a width of 20 mm and a length of 200 mm along the longitudinal direction or the width direction of the film, affording a plurality of samples, and these samples were hung in a hot air oven at 150°C and heated for 5 minutes. The length of each sample after heating was measured, and the ratio of the shrunk length to the original length was taken as a heat shrinkage rate.

### 11) Wetting tension (mN/m)

In accordance with JIS K 6768 (1999), a film was aged at 23°C and a relative humidity of 50% for 24 hours, and then the wetting tension of the surfaces of the surface layer B and the surface layer C was measured.

### 12) Surface resistance value

In accordance with JIS K 6911 (1995), a film was aged at 23°C and a relative humidity of 65% for 24 hours, and then the surface resistance values of the surface layer B and the surface layer C were measured.

### 13) Three-dimensional average roughness SRa

The average roughness SRa of the surface layer B and the surface layer C was measured by a stylus method under the following conditions using a contact type three-dimensional surface roughness meter (manufactured by Kosaka Laboratory Ltd.: model ET-4000A).
Stylus tip radius: 0.5 µm
Stylus pressure: 50 µN
Cut-off value: 800 µm
Measurement length: 500 µm
Measurement speed: 0.1 µm/sec
Measurement interval: 5 µm

### 14) Falling-off rate of anti-blocking agent

Using a universal tensile tester (STM-T-50BP manufactured by Toyo Baldwin Co., Ltd.), a weight (contact surface: 63 mm × 63 mm) having a weight of 0.5 kg to which velveteen was attached and the measurement surface of the film were superimposed, and a friction test was conducted under the following conditions.
Temperature: 23°C
Relative humidity: 50%
Number of frictions: Consecutively 5 times at portion to be evaluated
Tensile speed: 200 mm/min

Following the above treatment, observation was conducted at a measurement magnification of 600 times using a tabletop microscope ("TM3030Plus Miniscope" manufactured by Hitachi, Ltd.), the number of all the observed anti-blocking agents in the film and the number of the anti-blocking agents that had fallen from the film were counted, and the falling-off rate of the anti-blocking agent was calculated by the following formula. 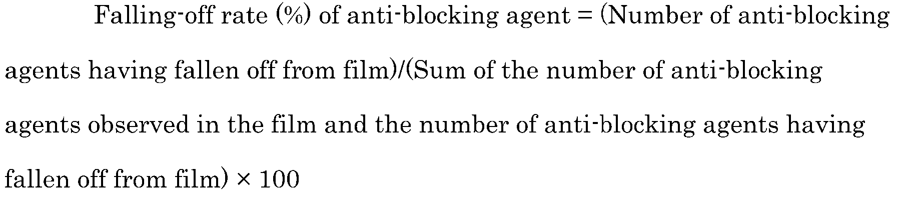 Falling-off rate (%) of anti-blocking agent = (Number of anti-blocking agents having fallen off from film)/(Sum of the number of anti-blocking agents observed in the film and the number of anti-blocking agents having fallen off from film) × 100

### 15) Coefficient of dynamic friction

Two films were prepared, the surface layer B of one film and the surface of the surface layer C of the other film were superposed on each other, and measurement was conducted in an atmosphere of 23°C and a relative humidity of 50% using a universal tensile tester STM-T-50BP (manufactured by Toyo Baldwin Co., Ltd.) in accordance with JIS K 7125

(1999).

### 16) Wrinkles of film roll

A film roll was prepared by winding the formed biaxially oriented polypropylene film with a width of 600 mm and a winding length of 1500 m by using a slitter, and the evaluation of wrinkles on the surface layer of the film roll was visually determined according to the following criteria.
A+: No wrinkles were present.
A: Slight wrinkles were present, but the wrinkles were removed when the film was unwound and then a tension of about 5 N/m was applied to the film unwound.
B: Slight wrinkles were present, but the wrinkles were removed when the film was unwound and then a tension of about 20 N/m was applied to the film unwound.
C: Deep wrinkles were present, and the wrinkles were not removed even when the film was unwound and then the tension of about 20 N/m was applied to the film unwound.

### 17) Staining of guide roll

A film having a length of 500 m was passed through a slitter (NS-SLITTER FN-105 manufactured by NISHIMURA MFG. CO., LTD.), and then staining of a guide roll was evaluated.
A: There was no staining of the guide roll.
B: There was partial slight staining of the guide roll.
C: The entire surface of the guide roll was stained.

### 18) Evaluation of aqueous ink printability

The surface layer B of a film was subjected to gravure printing with an aqueous ink at a speed of 50 m/min using a gravure printing machine (manufactured by FUJI KIKAI KOGYO Co., Ltd.). A process chart plate was used as a print pattern. The ink and diluent used are shown below.
Aqueous ink: Trade name: JW291 AQUAECOL R39 (registered trademark) manufactured by Toyo Ink Co., Ltd.
Dilution solvent: Trade name AQ602F manufactured by Toyo Ink Co., Ltd.

### (Microscope observation)

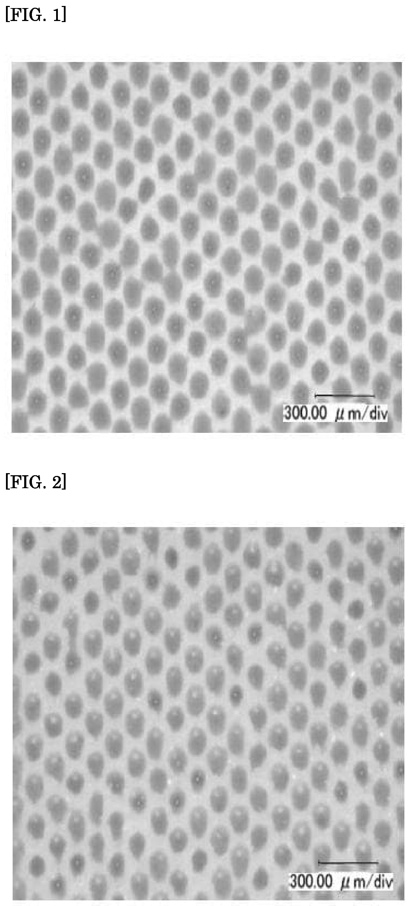

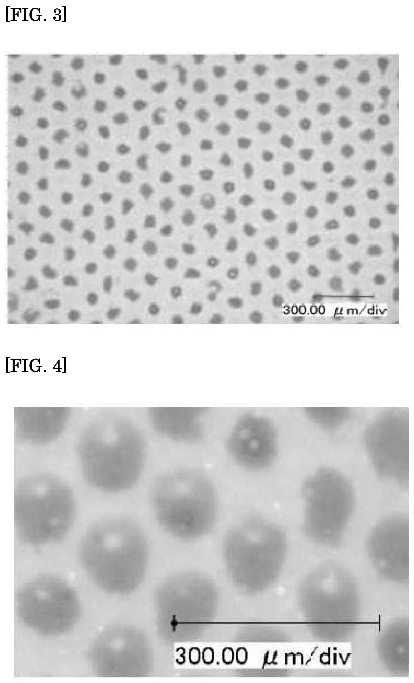

Using DIGITAL MICROSCOPE VHX-200 manufactured by KEYENCE CORPORATION, the shape of the printed dots was observed at 125 magnifications, and the dot size and the degree of ink cissing were evaluated. Three-grade evaluation criteria are shown. In Figs. 1 to 3, the dot shape according to each evaluation is shown as an example. As to ink cissing, an enlarged view of the ink cissing portion in Fig. 2 is illustrated in Fig. 4.
A: The dot size is even, and there is no ink cissing. (Fig. 1)
B: The dot size is even, and there is ink cissing. (Fig. 2)
C: The dot size is uneven, and there is ink cissing. (Fig. 3)

### 19) Evaluation of aqueous ink adhesiveness

The adhesiveness of the ink subjected to gravure printing in 18) was evaluated by cross-cut peeling (2 mm square × 25 pieces; a 90° peeling method using and Cellotape (registered trademark in Japan) rcv 18 mm wide manufactured by NICHIBAN Co., Ltd.), and judged from a practicality aspect, and the adhesiveness was ranked as follows.
A: Number of squares peeled: 0 to 5 squares
B: Number of squares peeled: 6 to 15 squares
C: Number of squares peeled: 15 or more squares

### 20) Adhesiveness of aluminum vapor deposition layer

A film sized 105 mm × 105 mm was cut out from the obtained film roll, and vapor deposition was conducted on the surface of the surface layer B using a small evaporation system (VWR-400/ERH manufactured by ULVAC, Inc.) such that the film thickness was 30 nm, affording a vapor deposition film having an aluminum vapor deposition layer on the surface layer B. Cellotape (registered trademark in Japan) with a width of 18 mm manufactured by NICHIBAN Co., Ltd. was attached to the aluminum vapor deposition layer of the vapor deposition film, and the adhesiveness of the aluminum vapor deposition layer was evaluated by a 90° peeling method.
A: There was no peeling of the aluminum vapor deposition layer.
B: Peeling of the aluminum vapor deposition layer was partially observed.
C: Peeling of the aluminum vapor deposition layer was entirely observed.

### 21) Oxygen transmission rate of aluminum vapor deposition film

In accordance with the electrolytic sensor method (Appendix A) of JIS K 7126-2, the oxygen transmission rate of a vapor deposition film produced by the production method described above in 20) was measured in an atmosphere at a temperature of 23°C and a relative humidity of 65% using an oxygen transmission rate analyzer (OX-TRAN 2/20 manufactured by MOCON). The oxygen transmission rate was measured in a direction in which oxygen was transmitted from the base material layer A side to the aluminum vapor deposition layer.

### 22) Laminate strength

The laminate strength was measured by the following procedures. Procedure 1) Preparation of laminated body of biaxially oriented polypropylene film and unstretched polypropylene film (heat-sealable film)

The preparation was conducted as follows using a continuous dry laminator. The surface on the surface layer C side of the biaxially oriented polypropylene film obtained in each of Examples and Comparative Examples was coated with an adhesive by gravure coating such that the application amount was 2.8 g/m² when dried, and then the film was guided to a drying zone and dried at 80°C for 5 seconds. Subsequently, the heat-sealable film was bonded between rolls provided on the downstream side (roll pressure: 0.2 MPa, roll temperature: 50°C). The obtained laminate film was subjected to an aging treatment at 40°C for 3 days in a wound state. However, for the film of Example 5, the surface layer C was corona-treated such that the wetting tension was 40 mN/m immediately before the gravure coating with the adhesive. As the adhesive, a urethane-based adhesive obtained by mixing 28.9% by mass of a main agent (TM569 manufactured by Toyo-Morton, Ltd.), 4.00% by mass of a curing agent (CAT10L manufactured by Toyo-Morton, Ltd.), and 67.1% by mass of ethyl acetate was used, and as the heat-sealable film, an unstretched polypropylene film (P1193, thickness: 40 µm) manufactured by TOYOBO Co., Ltd. was used.

### Procedure 2) Measurement of laminate strength

The laminate film obtained above was cut into a strip shape having a length of 200 mm and a width of 15 mm with the longitudinal direction of the biaxially oriented polypropylene film as a long side, and the peel strength at the time of T-shape peeling at a tensile speed of 200 mm/min in an environment of 23°C and a relative humidity of 65% was measured using a tensile tester (TENSILON, manufactured by Orientec Co., Ltd.). The measurement was conducted three times, and the average value thereof was taken as the laminate strength.

### 23) Evaluation of appearance of heat-sealed portion

An adhesive (TM329/CAT8B manufactured by Toyo-Morton, Ltd.) was applied to the obtained film, and then a 30 µm-thick unstretched polypropylene film (P1128 manufactured by TOYOBO Co., Ltd.) as a heat-sealable film was dry-laminated on a metal roll heated to 60°C, and aged at 40°C for 3 days, affording a laminated body for evaluation. The heat-sealable film itself of the laminated body was heat-sealed with a heat sealer such that a three-side seal bag sized 130 mm × 180 mm was formed, whereby a three-side seal bag was produced. The heat-sealing was conducted at a pressure of 0.2 MPa for 1 second with the width of the seal bar set to 10 mm and the heat-sealing temperature set to 150°C. The appearance of wrinkles of the heat-sealed portion was visually evaluated.
A: No wrinkles can be confirmed in the heat-sealed portion in both the width direction and the length direction of the film.
B: Wrinkles can be confirmed in the heat-sealed portion in only one of the width direction and the length direction of the film.
C: Wrinkles can be confirmed in the heat-sealed portion in both the width direction and the length direction of the film.

### (Raw material resin)

Details of the polypropylene-based resins PP-1 to PP-7 as raw materials used in the following Examples and Comparative Examples are shown in Table 1. For the anti-blocking agent master batch (manufactured by Nippon Pigment Co., Ltd., hereinafter referred to as MB-1), PP-3 shown in Table 1 was used as the polypropylene-based resin, porous silica particles having an average particle size of 2.9 µm and a pore volume of 1.6 mL/g were used as the anti-blocking agent (AB agent), and the content of the anti-blocking agent in MB-1 was adjusted to 5.0% by mass.

**[Table 1]**

| | PP-1 | PP-2 | PP-3 | PP-4 | PP-5 | PP-6 | PP-7 |
|---|---|---|---|---|---|---|---|
| Components other than propylene | 0 | 0 | 0 | 0 | 5.2 | 6.7 | 3 |
| Copolymerization amount (mol%) | | | | | | | |
| Copolymer component | - | - | - | - | Ethylene, butene | Ethylene, butene | Ethylene |
| M F R(g/10min) | 7.5 | 2.5 | 5.6 | 3.2 | 6.0 | 6.0 | 7.0 |
| [mmmm](%) | 98.0 | 98.0 | 98.4 | 93.8 | - | - | - |
| Tm (°C) | 169 | 167 | 163 | 159 | 140 | 130 | 125 |
| Mw | 240,000 | 320,000 | 300,000 | 310,000 | 250,000 | 250,000 | 220,000 |
| Mn | 64,900 | 82,100 | 54,500 | 58,500 | 49,000 | 62,000 | 84,600 |
| Mw/Mn (-) | 3.7 | 3.9 | 5.5 | 5.3 | 5.1 | 4.1 | 2.6 |
| ΔHc(J/g) | 84 | 75 | 98 | 93 | 53 | 33 | 64 |

### (Example 1)

For the base material layer A, a blend of 70% by mass of PP-1 and 30% by mass of PP-2 was used. For the surface layer B and the surface layer C, a blend of 26% by mass of PP-3, 20% by mass of PP-4, 50% by mass of PP-5, and 4% by mass of MB-1 was used. Using a 45 mm extruder for the base material layer A, a 25 mm extruder for the surface layer B, and a 20 mm extruder for the surface layer C, the respective raw material resins were melted at 250°C, co-extruded through a T-die into a sheet form, cooled and solidified with the surface layer B being in contact with a chill roll at 30°C, and then stretched 4.5 times in the longitudinal direction (MD) at 135°C. Then, in a tenter, both ends in the film width direction were gripped with clips, and preheated at 173°C, then the film was stretched 8.2 times in the width direction (TD) at 164°C, and heat-set at 171°C while being relaxed by 6.7% in the width direction (TD), affording a laminated body having a three-layer structure of surface layer B/base material layer A/surface layer C. The surfaces of the surface layer B and the surface layer C of the laminated body were subjected to a corona treatment under the condition of an applied current value of 0.75 A using a corona treatment machine manufactured by SOFTAL Corona & Plasma GmbH, and then the laminated body was wound with a winder, affording a biaxially oriented polypropylene film. The overall thickness of the obtained biaxially oriented polypropylene film was 20 µm (the thicknesses of surface layer B/base material layer A/surface layer C were 1.3 µm/17.4 µm/1.3 µm).

### (Examples 2 to 7)

Biaxially oriented polypropylene films were obtained in the same manner as in Example 1 except that the raw material compositions of the surface layer B and the surface layer C and the film formation conditions were changed as shown in Tables 2 and 3.

### (Comparative Examples 1, 3, 4)

Biaxially oriented polypropylene films were obtained under the same conditions as in Example 1 except that the raw material compositions of the surface layer B and the surface layer C were changed as shown in Table 2.

### (Comparative Example 2)

A biaxially oriented polypropylene film was obtained in the same manner as in Example 1 except that the raw material compositions of the surface layer B and the surface layer C were changed to 26% by mass of PP-3, which was a polypropylene-based resin having a melting point of 163°C, 20% by mass of PP-4, which was a polypropylene-based resin having a melting point of 159°C, and 50% by mass of PP-7, which was a polypropylene-based resin having a melting point of 140°C, and the film formation conditions were changed to those shown in Table 3.

### (Comparative Example 5)

A biaxially oriented polypropylene film was obtained under the same conditions as in Example 1 except that the raw material composition of the base material layer A was changed as shown in Table 2, and only PP-4, which was a polypropylene-based resin having a melting point of 159°C, was used as the raw material of the base material layer A.

The raw material composition of each layer, the thickness of each layer, and the film production conditions of the films of Examples and Comparative Examples are shown in Tables 2 and 3, and various physical properties and various evaluations of the films of Examples and Comparative Examples are shown in Table 4.

**[Table 2]**

| | | | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|---|
| Base material layer A | Raw material | PP-1 Melting point:169°C | mass% | 70 | 70 | 70 | 70 | 70 | 70 | 70 | 70 | 70 | 70 | 70 | 0 |
| | | PP-2 Melting point:167°C | mass% | 30 | 30 | 30 | 30 | 30 | 30 | 30 | 30 | 30 | 30 | 30 | 0 |
| | | PP-4 Melting point:159°C | mass% | 0 | 0 | 0 | 0 | 0 | 0 | 0 | 0 | 0 | 0 | 0 | 100 |
| | Thickness | | µm | 17.4 | 17.4 | 17.4 | 17.4 | 17.4 | 17.4 | 17.4 | 17.4 | 17.4 | 17.4 | 17.4 | 17.4 |
| | | PP-3 Melting point:163°C | mass% | 26 | 21 | 61 | 25 | 25 | 26 | 26 | 56 | 26 | 46 | 26 | 26 |
| | | PP-4 Melting point:159°C | mass% | 20 | 0 | 0 | 17 | 17 | 20 | 20 | 20 | 20 | 50 | 20 | 20 |
| | | PP-5 Melting point:140°C | mass% | 50 | 75 | 35 | 50 | 50 | 0 | 50 | 20 | 0 | 0 | 50 | 50 |
| | | PP-6 Melting point:130°C | mass% | 0 | 0 | 0 | 0 | 0 | 50 | 0 | 0 | 0 | 0 | 0 | 0 |
| | | PP-7 Melting point:125°C | mass% | 0 | 0 | 0 | 0 | 0 | 0 | 0 | 0 | 50 | 0 | 0 | 0 |
| | Raw material | MB-1 Melting point:163°C | mass% | 4 | 4 | 4 | 8 | 8 | 4 | 4 | 4 | 4 | 4 | 4 | 4 |
| Surface layer B | | Type of AB agent | - | Silica | Silica | Silica | Silica | Silica | Silica | Silica | Silica | Silica | Silica | Silica | Silica |
| | | Particle size of AB agent | µm | 2.9 | 2.9 | 2.9 | 2.9 | 2.9 | 2.9 | 2.9 | 2.9 | 2.9 | 2.9 | 2.9 | 2.9 |
| | | Pore volume of AB agent | mL/ g | 1.6 | 1.6 | 1.6 | 1.6 | 1.6 | 1.6 | 1.6 | 1.6 | 1.6 | 1.6 | 1.6 | 1.6 |
| | | Content of AB agent | ppm by mass | 2000 | 2000 | 2000 | 4000 | 4000 | 2000 | 2000 | 2000 | 2000 | 2000 | 2000 | 2000 |
| | Thickness | | µm | 1.3 | 1.3 | 1.3 | 1.3 | 1.3 | 1.3 | 1.3 | 1.3 | 1.3 | 1.3 | 1.3 | 1.3 |
| | Corona surface treatment | | - | Yes | Yes | Yes | Yes | Yes | Yes | Yes | Yes | Yes | Yes | Yes | Yes |
| | | PP-3 Melting point:163°C | mass% | 26 | 21 | 61 | 25 | 25 | 26 | 26 | 56 | 26 | 46 | 46 | 26 |
| | | PP-4 Melting point:159°C | mass% | 20 | 0 | 0 | 17 | 17 | 20 | 20 | 20 | 20 | 50 | 50 | 20 |
| | | PP-5 Melting point:140°C | mass% | 50 | 75 | 35 | 50 | 50 | 0 | 50 | 20 | 0 | 0 | 0 | 50 |
| | | PP-6 Melting point:130°C | mass% | 0 | 0 | 0 | 0 | 0 | 50 | 0 | 0 | 0 | 0 | 0 | 0 |
| | Raw material | PP-7 Melting point:125°C | mass% | 0 | 0 | 0 | 0 | 0 | 0 | 0 | 0 | 50 | 0 | 0 | 0 |
| Surface layer C | | MB-1 Melting point:163°C | mass% | 4 | 4 | 4 | 8 | 8 | 4 | 4 | 4 | 4 | 4 | 4 | 4 |
| | | Type of AB agent | - | Silica | Silica | Silica | Silica | Silica | Silica | Silica | Silica | Silica | Silica | Silica | Silica |
| | | Particle size of AB agent | µm | 2.9 | 2.9 | 2.9 | 2.9 | 2.9 | 2.9 | 2.9 | 2.9 | 2.9 | 2.9 | 2.9 | 2.9 |
| | | Pore volume of AB agent | mL/ g | 1.6 | 1.6 | 1.6 | 1.6 | 1.6 | 1.6 | 1.6 | 1.6 | 1.6 | 1.6 | 1.6 | 1.6 |
| | | Content of AB agent | ppm by mass | 2000 | 2000 | 2000 | 4000 | 4000 | 2000 | 2000 | 2000 | 2000 | 2000 | 2000 | 2000 |
| | Thickness | | µm | 1.3 | 1.3 | 1.3 | 1.3 | 1.3 | 1.3 | 1.3 | 1.3 | 1.3 | 1.3 | 1.3 | 1.3 |
| | Corona surface treatment | | - | Yes | Yes | Yes | Yes | No | Yes | Yes | Yes | Yes | Yes | Yes | Yes |

**[Tablle 3]**

| | | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|
| | Melt resin temperature | °C | 250 | 250 | 250 | 250 | 250 | 250 | 250 | 250 | 250 | 250 | 250 | 250 |
| | Chill roll temperature | °C | 30 | 30 | 30 | 30 | 30 | 30 | 30 | 30 | 40 | 30 | 30 | 30 |
| | Stretch ratio in longitudinal direction | times | 4.5 | 4.5 | 4.5 | 4.5 | 4.5 | 4.5 | 4.5 | 4.5 | 4.5 | 4.5 | 4.5 | 4.5 |
| | Stretching temperature in longitudinal direction | °C | 135 | 135 | 135 | 135 | 135 | 135 | 125 | 135 | 125 | 135 | 135 | 135 |
| Film formation conditions | Stretch ratio in width direction | times | 8.2 | 8.2 | 8.2 | 8.2 | 8.2 | 8.2 | 8.2 | 8.2 | 8.2 | 8.2 | 8.2 | 8.2 |
| | Preheating temperature for stretching in width direction | °C | 173 | 173 | 173 | 173 | 173 | 173 | 167 | 173 | 167 | 173 | 173 | 168 |
| | Stretching temperature in width direction | °C | 164 | 164 | 164 | 164 | 164 | 164 | 163 | 164 | 163 | 164 | 164 | 155 |
| | Heat-setting temperature | °C | 171 | 171 | 171 | 171 | 171 | 171 | 169 | 171 | 169 | 171 | 171 | 165 |
| | Relaxation rate in width direction | % | 6.7 | 6.7 | 6.7 | 6.7 | 6.7 | 6.7 | 6.7 | 6.7 | 6.7 | 6.7 | 6.7 | 6.7 |

**[Table 4]**

| | | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|
| | Thickness | µm | 20 | 20 | 20 | 20 | 20 | 20 | 20 | 20 | 20 | 20 | 20 | 20 |
| | Haze | % | 2.4 | 2.9 | 2.1 | 4.1 | 2.4 | 2.7 | 1.7 | 1.9 | 2.1 | 2.6 | 2.5 | 2.4 |
| | Appearance | - | A | A | A | A | A | A | A | A | A | A | A | A |
| | Tensile modulus of elasticity (longitudinal direction) | GPa | 2.0 | 2.1 | 2.1 | 2.1 | 2.0 | 2.0 | 2.2 | 2.5 | 2.1 | 2.4 | 2.2 | 1.8 |
| | Tensile modulus of elasticity (width direction) | GPa | 4.1 | 4.1 | 4.4 | 3.9 | 4.1 | 3.9 | 4.4 | 5.0 | 4.2 | 4.7 | 4.4 | 3.6 |
| | Sum of tensile moduli of elasticity | GPa | 6.1 | 6.2 | 6.5 | 6.0 | 6.1 | 5.9 | 6.2 | 7.5 | 6.3 | 7.1 | 6.6 | 5.4 |
| | Heat shrinkage rate at 150°C (longitudinal direction) | % | 4.3 | 4.5 | 4.0 | 4.3 | 4.3 | 4.2 | 5.8 | 4.7 | 5.6 | 4.1 | 4.2 | 9.9 |
| | Heat shrinkage rate at 150°C (width direction) | % | 7.0 | 7.0 | 7.2 | 7.5 | 7.0 | 6.8 | 10.1 | 5.7 | 10.2 | 7.2 | 7.1 | 18.0 |
| Film properties | Sum of heat shrinkage rates at 150°C | % | 11.3 | 11.5 | 11.2 | 11.8 | 11.3 | 11.0 | 15.9 | 10.4 | 15.8 | 11.0 | 11.5 | 27.9 |
| | Wetting tension (surface layer B) | mN/m | 39 | 39 | 39 | 40 | 40 | 40 | 41 | 39 | 42 | 40 | 39 | 41 |
| | Wetting tension (surface layer C) | mN/m | 41 | 41 | 39 | 39 | 30 | 40 | 40 | 39 | 40 | 40 | 40 | 41 |
| | Surface resistance value (surface layer B) | LogΩ | 14.9 | 15.0 | 14.8 | 15.0 | 14.9 | 14.8 | 15.4 | 15.3 | 15.5 | 15.0 | 14.9 | 15.1 |
| | Surface resistance value (surface layer C) | LogΩ | 15.0 | 15.0 | 14.7 | 14.9 | 15.0 | 14.8 | 15.3 | 15.1 | 15.7 | 15.6 | 15.3 | 15.6 |
| | Three-dimensional average roughness SRa (surface layer B) | nm | 15 | 19 | 21 | 30 | 15 | 18 | 14 | 31 | 15 | 19 | 15 | 49 |
| | Three-dimensional average roughness SRa (surface layer C) | nm | 18 | 20 | 24 | 32 | 16 | 23 | 19 | 31 | 19 | 20 | 20 | 52 |
| | Falling-off rate of anti-blocking agent (surface layer B) | % | 2.5 | 3.1 | 1.0 | 6.7 | 2.5 | 2.2 | 2.8 | 0.1 | 10.8 | 0.8 | 1.6 | 7.6 |
| | Falling-off rate of anti-blocking agent (surface layer C) | % | 2.6 | 3.3 | 1.1 | 6.9 | 2.6 | 2.0 | 3.0 | 0.3 | 11.1 | 0.9 | 1.9 | 7.7 |
| | Coefficient of dynamic friction (surface layer B/surface layer C) | - | 0.49 | 0.50 | 0.44 | 0.39 | 0.31 | 0.52 | 0.47 | 0.43 | 0.47 | 0.48 | 0.48 | 0.46 |
| Processing evaluation | Staining of guide roll | - | A | A | A | B | A | A | A | A | C | A | A | A |
| | Wrinkles of film roll | - | A | A | A | A | A | A | A | A | A | A | A | A |
| | Aqueous ink printability | - | A | A | A | A | A | A | A | C | B | C | A | A |
| | Aqueous ink adhesiveness | - | A | A | A | A | A | A | A | C | A | B | A | A |
| | Adhesiveness of aluminum vapor deposition layer | - | A | A | A | A | A | A | A | C | B | C | A | A |
| | Oxygen transmission rate of aluminum vapor deposition film | mL/m²/day/MPa | 21 | 20 | 24 | 27 | 21 | 20 | 23 | 48 | 40 | 58 | 22 | 28 |
| | Laminate strength | N/15mm | 2.9 | 3.0 | 2.7 | 3.0 | 2.9 | 3.0 | 2.6 | 1.3 | 2.3 | 1.1 | 1.1 | 2.7 |
| | Appearance of heat-sealed portion | - | A | A | A | A | A | A | A | A | A | A | A | C |

With the biaxially oriented polypropylene films obtained in Examples 1 to 7, staining of the guide roll did not occur or staining of the guide roll could be extremely reduced. Further, the obtained film roll had less wrinkles, and the film cut off from the film roll had less cissing of the aqueous ink on the layer B and had good adhesiveness. In addition, when aluminum was vapor deposited, the resulting products were excellent in the adhesiveness of an aluminum vapor deposition layer, the aluminum vapor deposition film had a low oxygen transmission rate, and the products were excellent in gas barrier properties. Furthermore, when an unstretched polypropylene film was further laminated on the surface layer C, the laminate strength with the unstretched polypropylene film was high, and the appearance of the heat-sealed portion was also good.

In contrast, in the film of Comparative Example 1, since the content of the polypropylene-based resin having a melting point of 130°C or more and 158°C or less was small in the surface layer B and the surface layer C, the aqueous ink printability and the adhesiveness on the surface layer B were poor, the adhesiveness of the aluminum vapor deposition layer was also poor, and the oxygen barrier property of the aluminum vapor deposition film was inferior to those of Examples. Furthermore, when an unstretched polypropylene film was further laminated on the surface layer C, the laminate strength with the unstretched polypropylene film was poor.

In Comparative Example 2, a biaxially oriented polypropylene film could be obtained even when the stretching temperature in the longitudinal direction, the stretching preheating temperature in the width direction, and the heat-setting temperature were lowered, but the falling-off rate of the anti-blocking agent was large, and there was much staining of the guide roll. Further, the aqueous ink printability on the surface layer B and the adhesiveness of the aluminum vapor deposition layer were poor.

In Comparative Example 3, since any polypropylene-based resin having a melting point of 130°C or more and 158°C or less was not contained in the surface layer B and the surface layer C, the aqueous ink printability and the adhesiveness on the surface layer B were poor, the adhesiveness of the aluminum vapor deposition layer was also poor, and the oxygen barrier property of the aluminum vapor deposition film was inferior to those of Examples. Furthermore, when an unstretched polypropylene film was further laminated on the surface layer C, the laminate strength with the unstretched polypropylene film was poor.

In Comparative Example 4, since any polypropylene-based resin having a melting point of 130°C or more and 158°C or less was not contained in the surface layer C, the laminate strength was low.

In the film of Comparative Example 5, since the raw material of the base material layer A was a polypropylene-based resin having a melting point of 159°C, the heat shrinkage rates at 150°C in the longitudinal direction and the width direction were high. As a result, many wrinkles were generated in the heat-sealed portion of the laminated body subjected to lamination processing, and the appearance was poor, so that the laminated body could not be used as a packaging bag. In addition, the oxygen barrier property of the aluminum vapor deposition film was also inferior to those of Examples.

### INDUSTRIAL APPLICABILITY

The biaxially oriented polypropylene film of the embodiment has excellent laminate strength when a functional layer such as a printed layer, an inorganic thin film layer, or a coating layer, and a heat-sealable film are laminated on both surfaces thereof to form a laminated body, and thus can be used as a film serving as a base material to be used in a laminated body suitable for various applications such as food packaging, labeling, and industrial use, and therefore is industrially useful.

## Claims

1. A biaxially oriented polypropylene film comprising:
a base material layer A formed of a polypropylene-based resin composition;
a surface layer B formed of a polypropylene-based resin composition; and
a surface layer C formed of a polypropylene-based resin composition,
wherein the following (1) to (4) are satisfied:
(1) the biaxially oriented polypropylene film has a heat shrinkage rate in a longitudinal direction at 150°C of 0.0% or more and 10.0% or less;
(2) the biaxially oriented polypropylene film has a heat shrinkage rate in a width direction at 150°C of 0.0% or more and 15.0% or less;
(3) a falling-off rate of an anti-blocking agent in the surface layer B and a falling-off rate of an anti-blocking agent in the surface layer C are each 10% or less; and
(4) a laminate strength is 1.5 N/15 mm or more.

2. The biaxially oriented polypropylene film according to claim 1, wherein a surface of the surface layer B, a surface of the surface layer C, or surfaces of both the surface layers have a wetting tension of 36 mN/m or more.

3. The biaxially oriented polypropylene film according to claim 1, wherein the surface layer B and the surface layer C each contain a polypropylene-based resin having a melting point of 130°C or more and 158°C or less in a content of 25% by mass or more and 85% by mass or less.

4. The biaxially oriented polypropylene film according to claim 3, wherein the surface layer B and the surface layer C each contain a polypropylene-based resin having a melting point of 159°C or more and 175°C or less in a content of 15% by mass or more and 75% by mass or less.

5. The biaxially oriented polypropylene film according to claim 3, wherein the polypropylene-based resins of the surface layer B and the surface layer C are each a propylene-ethylene-butene copolymer.

6. The biaxially oriented polypropylene film according to claim 1, wherein the base material layer A contains 70% by mass or more of a polypropylene-based resin having a mesopentad fraction ([mmmm]%) of 95.0% or more and 99.9% or less and a melting point of 160°C or more and 175°C or less.

7. The biaxially oriented polypropylene film according to claim 1, wherein the surface layer B, the surface layer C, or both the surface layers have a surface resistance value of 14.0 LogΩ or more and 18 LogΩ or less.

8. The biaxially oriented polypropylene film according to claim 1, wherein
a content of the anti-blocking agent in the surface layer B is 100 ppm or more and 10000 ppm or less, and
a content of the anti-blocking agent in the surface layer C is 100 ppm or more and 10000 ppm or less.

9. The biaxially oriented polypropylene film according to claim 8, wherein the anti-blocking agent of the surface layer B and the anti-blocking agent of the surface layer C each contain particles having a pore volume of 0.2 mL/g to 3 mL/g.

10. The biaxially oriented polypropylene film according to claim 1, wherein (4) the laminate strength is 10 N/15 mm or less.

11. A laminated body comprising the biaxially oriented polypropylene film according to any one of claims 1 to 10, and further comprising a heat-sealable polyolefin film,
wherein the surface layer B, the base material layer A, the surface layer C, and the heat-sealable polyolefin film are laminated in this order.

12. The laminated body according to claim 11, further comprising a functional layer,
wherein the functional layer, the surface layer B, the base material layer A, the surface layer C, and the heat-sealable polyolefin film are laminated in this order.

13. The laminated body according to claim 12, wherein the functional layer is a printed layer, a vapor deposition layer, or a coating layer.

14. The laminated body according to claim 12, further comprising a stretched polyolefin film or a stretched polyester film,
wherein the stretched polyolefin film or the stretched polyester film, the functional layer, the surface layer B, the base material layer A, the surface layer C, and the heat-sealable polyolefin film are laminated in this order.
